# EUROPÄISCHE PATENTSCHRIFT

(11) **EP 3 057 754 B1**
(45) Veröffentlichungstag und Bekanntmachung des Hinweises auf die Patenterteilung: **01.01.2020**
(21) Anmeldenummer: 14784053.2
(22) Anmeldetag: 13.10.2014
(51) Int. Cl.: B29C 45/00, C08J 7/04, C08L 69/00

(54) **POLYCARBONATZUSAMMENSETZUNGEN MIT VERBESSERTER HAFTUNG ZU POLYURETHANSCHICHTEN**
POLYCARBONATE COMPOSITIONS WITH IMPROVED ADHESION TO POLYURETHANE LAYERS
COMPOSITIONS DE POLYCARBONATE AYANT UNE ADHÉRENCE AMÉLIORÉE AUX COUCHES DE POLYURÉTHANE

(30) Priorität: 18.10.2013 EP 13189296
(43) Veröffentlichungstag der Anmeldung: 24.08.2016
(73) Patentinhaber: Covestro Deutschland AG, 51373 Leverkusen (DE)
(72) Erfinder: HUFEN, Ralf, 47239 Duisburg (DE); ECKEL, Thomas, 41540 Dormagen (DE); HOBEIKA, Sven, 42699 Solingen (DE); KUHLMANN, Timo, 42799 Leichlingen (DE); ROLF, Peter, 51468 Bergisch Gladbach (DE)
(74) Vertreter: Levpat
(86) Internationale Anmeldenummer: PCT/EP2014/071852
(87) Internationale Veröffentlichungsnummer: WO 2015/055561

(56) Entgegenhaltungen:
- EP-A1- 0 363 608
- WO-A1-2006/072366
- US-A1- 2012 053 271

## Beschreibung

Gegenstand der vorliegenden Erfindung sind Polycarbonatzusammensetzungen mit verbesserter Haftung zu Polyurethansystemen, Verbundsysteme enthaltend diese Polycarbonatzusammensetzungen und Polyurethansysteme sowie Formkörper aus diesen Verbundsystemen und Verfahren zur Herstellung der Verbundsysteme. Die Polycarbonatzusammensetzungen zeichnen sich neben einer verbesserten Haftung an das Polyurethansystem durch eine gleichbleibend hohe Zähigkeit, hohe Wärmeformbeständigkeit sowie eine exzellente Flammwidrigkeit aus.

WO 2006/072366 A1 beschreibt ein Verfahren zum Formen und Beschichten eines Substrats in einem Formwerkzeug mit wenigstens zwei Kavitäten. Das Verfahren umfasst die Schritte:
a) Formen eines Substrats in einer ersten Kavität des Formwerkzeugs,
b) das Einbringen des im vorangegangenen Schritt hergestellten Substrats in eine zweite Kavität des Formwerkzeugs und
c) Beschichten des Substrats in der zweiten Kavität mit einem Lack, wobei das Beschichten unter erhöhtem Druck erfolgt.

Beispielhaft und bevorzugt werden Polyurethanlacke und PC+ABS-Substrate (Polycarbonat + Acrylnitril-Butadien-Styrol-Substrate) genannt. Über den Einfluss der Trägermaterialzusammensetzung auf die Hafteigenschaften des Materialverbundes werden in dieser Anmeldung keine Hinweise gegeben.

EP 2089207 A1 offenbart ein Verfahren zur Herstellung eines Verbundbauteils, insbesondere umfassend ein Spritzgussteil sowie ein Polyurethan-Element, mit den Schritten
a) Herstellen eines Trägerbauteils,
b) Verbringen oder Umsetzen des Trägerbauteils in eine geöffnete Kavität eines Werkzeugs,
c) Schließen des Werkzeugs bis auf eine vorbestimmte Position, wobei eine vergrößerte Kavität mit einer ersten Größe geschaffen ist,
d) Erzeugen eines Unterdrucks in der vergrößerten Kavität erster Größe,
e) Einfüllen eines Flutungsmaterials in die vergrößerte Kavität und
f) Durchführen eines Prägeschrittes gleichzeitig mit dem Einfüllen und/oder anschließend an das

Einfüllen des Flutungsmaterials, wobei die Kavität zumindest geringfügig verkleinert wird.

Zur Verbesserung der Verbundhaftung wird hier Aktivierung der Oberfläche des Thermoplasten durch Abflammen, Plasmabeaufschlagung oder Gas beschrieben. Über den Einfluss der Trägermaterialzusammensetzung auf die Hafteigenschaften des Materialverbundes, werden in dieser Veröffentlichung keine Hinweise gegeben.

DE 10 2006 033 059 A1 offenbart ein Verfahren zur Herstellung von Kunststoff-Innenraumteilen. Hierbei wird in einem ersten Schritt der Träger in einem ersten Werkzeug geformt, wobei das erste Werkzeug danach mindestens teilweise durch ein zweites Werkzeug ersetzt wird und anschließend in einem zweiten Schritt die Deckschicht auf dem Träger geformt wird. Dabei kommt als Trägermaterial eine Hartkomponente, z.B. PA+ABS- Blends (Polyamid+Acrylnitril-Butadien-Styrol) oder PC+ABS-Blends (Polycarbonat + Acrylnitril-Butadien-Styrol), und als Deckschicht eine Weichkomponente, vorzugsweise Polyurethanschaum, zum Einsatz. Über den Einfluss der Zusammensetzung der Trägermaterialien auf die Verbundeigenschaften der so hergestellten Bauteile werden in der Anmeldung keine Hinweise gegeben. Vielmehr wird in DE 10 206 033 059 A1 ebenfalls zur Verbesserung der Haftung vorgeschlagen, die Oberfläche durch Primer oder Laser-, Corona-, oder Plasmabehandlung vorzubereiten.

WO 99/20464 A1 offenbart Verbunde aus wenigstens zwei unterschiedlichen unmittelbar miteinander verbundenen Kunststoffmaterialien, wobei a) ein thermoplastisches Polymer oder eine thermoplastische Mischung von Polymeren ist, die wenigstens eine polare Verbindung aus wenigstens einem der Metalle der 1. bis 5. Hauptgruppe oder der 1. bis 8. Nebengruppe des Periodensystems als feinstverteiltes anorganisches Pulver enthalten und b) Polyurethan ist, welcher als Schaum, Lack oder als kompaktes Material vorliegt. Für den Verbund wird keine Haftvermittlerschicht benötigt. Auf den Einfluss der Trägermaterialzusammensetzung hinsichtlich ABS- und Kautschukgehalt auf die Hafteigenschaften des Materialverbundes, werden in dieser Veröffentlichung keine Hinweise gegeben.

DE 101 09 226 A1 offenbart eine Polycarbonat-Zusammensetzung enthaltend a) aromatisches Polycarbonat und/oder Polyestercarbonat, b) Pfropfpolymerisat und c) Copolymerisat aus Styrol und einem carboxylgruppenhaltigen Monomeren, wobei das Copolymerisat ein mittleres Molekulargewicht Mw von >= 10.500 g/mol aufweist, und wobei das Copolymere ein oder mehrere Vinylmonomere enthalten kann. Komponente C ist bevorzugt ein Copolymerisat aus Styrol und Maleinsäureanhydrid. DE 101 09 226 A1 offenbart weiterhin Verbundbauteile enthaltend mindestens eine erste Schicht (1) und eine zweite Schicht (2), worin Schicht (1) mindestens eine Polycarbonat-Zusammensetzung (wie unter a, b und c aufgezeigt) aufweist und Schicht (2) mindestens ein Polyurethan enthält. Der Verbund zeichnet sich dadurch aus, dass die Abnahme der Schaumhaftung zwischen Schicht (1) und Schicht (2) nach doppeltem Klimawechseltest (KWT) höchstens 35% beträgt. Über den Einfluss der Trägermaterialzusammensetzung hinsichtlich ABS- und Kautschukgehalt auf die Hafteigenschaften des Materialverbundes, werden in dieser Veröffentlichung keine Hinweise gegeben.

EP 0 363 608 A1 offenbart Polymermischungen enthaltend Polycarbonat, ein styrolhaltiges Copolymer und/oder ein styrolhaltiges Pfropfpolymer und ein Flammschutzmittel. Durch die Verwendung von oligomeren Phosphaten als Flammschutzmittel wird eine gute Eigenschaftskombination aus Flammschutz, geringer Migration des Flammschutzmittels zur Bauteiloberfläche, guter plastifizierender Wirkung und guter Wärmeformbeständigkeit erreicht. Über Haftungseigenschaften zu Polyurethansystemen wird nichts offenbart.

US 2012/0053271 A1 offenbart Zusammensetzungen enthaltend Polycarbonat, Polyester, kautschukmodifiziertes Pfropfpolymer und optional Flammschutzmittel, weitere Polymere und Additive. Die Zusammensetzungen zeichnen sich durch gute mechanische Eigenschaften und geringe Schwindung aus. Die gegenüber dem in dieser Anmeldung zitierten Stand der Technik vorteilhaften Eigenschaften werden durch besondere Polyester mit einem Anteil von Isophthalsäurebausteinen erreicht. Über Haftungseigenschaften zu Polyurethansystemen wird nichts offenbart.

Die Aufgabe der vorliegenden Erfindung bestand darin, Polycarbonatzusammensetzungen mit verbesserter Haftung zu Polyurethansystemen, Verbundsysteme enthaltend diese Polycarbonatzusammensetzungen und Polyurethanschichten sowie Formkörper aus diesen Verbundsystemen bereit zu stellen. Die Poly- carbonatzusammensetzungen sollen sich durch eine verbesserte Haftung an das Polyurethansystem, durch eine gleichbleibend hohe Zähigkeit, hohe Wärmeformbeständigkeit sowie eine exzellente Flammwidrigkeit auszeichnen.
Besonders bevorzugt sollen die Formmassen eine Vicat-Temperatur von über 100°C aufweisen.

Außerdem soll ein Verfahren zur Herstellung dieser Verbundbauteile bereitgestellt werden.

Die Polyurethanschicht kann dabei beispielsweise zur Verbesserung der Oberflächeneigenschaften wie z. B. Kratzfestigkeit, Selfhealing, Witterungsstabilität, Haptik, Optik sowie der Geräusch- und Wärmedämmung der Verbundbauteile dienen.

Die Aufgabe der vorliegenden Erfindung wird gelöst durch Polycarbonatzusammensetzungen enthaltend
A) 70 bis 95 Gew.-Teile, bevorzugt 72 bis 95 Gew.-Teile, besonders bevorzugt 73 bis 95 Gew.-Teile mindestens eines Polymers ausgewählt aus der Gruppe bestehend aus aromatisches Polycarbonat und aromatisches Polyestercarbonat,
B) 1 bis 10 Gew.-Teile, bevorzugt 2 bis 10 Gew.-Teile, besonders bevorzugt 3 bis 10 Gew.-Teile einer Mischung enthaltend mindestens ein polybutadienbasiertes Pfropfpolymerisat und mindestens ein butadienfreies Vinyl(co)polymerisat,
C) 1 bis 20 Gew.-Teile, bevorzugt 2 bis 19 Gew.-Teile, besonders bevorzugt 2 bis 18 Gew.-Teile mindestens eines phosphorhaltigen Flammschutzmittels ausgewählt aus der Gruppe bestehend aus Phosphonataminen, Phosphazenen sowie Mono- und oligomeren Phosphor- und Phosphonsäureester der allgemeinen Formel (V) 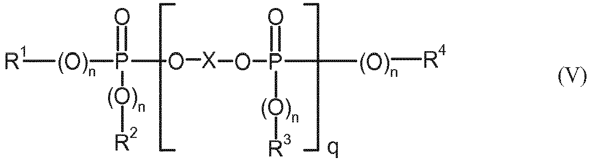 worin
   R¹, R², R³ und R⁴, unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆-Cycloalkyl, C₆ bis C₂₀-Aryl oder C₇ bis C₁₂-Aralkyl,
   n unabhängig voneinander, 0 oder 1
   q 0 bis 30
   X einen mehrkernigen aromatischen Rest mit 12 bis 30 C-Atomen, oder einen linearen oder verzweigten aliphatischen Rest mit 2 bis 30 C-Atomen, der OH-substituiert sein und bis zu 8 Etherbindungen enthalten kann,
      bedeuten,
D) 0,1 bis 20,0 Gew.-Teile, bevorzugt 0,2 bis 15 Gew.-Teile, besonders bevorzugt 0,3 bis 10 Gew.-Teile (jeweils bezogen auf die Summe der Komponenten A bis C) mindestens eines Polymeradditivs,
wobei der Polybutadiengehalt bezogen auf die Summe der Gewichtsteile der Komponenten A bis C 0,5 bis 5,5 Gew.-%, bevorzugt 1,0 bis 5,5 Gew.-%, besonders bevorzugt 1,5 bis 5,5 Gew.-% beträgt,
und wobei der Gesamtgehalt an butadienfreiem Vinyl(co)polymerisat aus der Komponente B bezogen auf die Summe der Komponenten A bis C 0,5 bis 5,0 Gew.-%, bevorzugt 0,5 bis 4,5 Gew.-%, besonders bevorzugt 1,0 bis 4,5 Gew.-% beträgt,
und wobei die Zusammensetzungen frei sind von thermoplastischen Polyestern wie Polyalkylenterephthlaten, und wobei die Summe der Gewichtsteile der Komponenten A, B und C in der Polycarbonatzusammensetzung auf 100 normiert ist.

Während die genannten Vorzugsbereiche frei miteinander kombinierbar sind, werden vorzugsweise die jeweilig erst-, mittel- und letztgenannten Bereiche miteinander kombiniert.

In einer weiteren bevorzugten Ausführungsform sind die Polycarbonatzusammensetzungen frei von Füll- und Verstärkungsstoffen wie beispielsweise Talk, Glas- oder Karbonfasern (ggf. auch gemahlen), Glas- oder Keramik(hohl)kugeln, Glimmer, Kaolin, CaCO3 und Glasschuppen.

In einer weiteren bevorzugten Ausführungsform enthalten die Polycarbonatzusammensetzungen
A) 70 bis 95 Gew.-Teile mindestens eines Polymers ausgewählt aus der Gruppe bestehend aus aromatisches Polycarbonat und aromatisches Polyestercarbonat,
B) 1 bis 10 Gew.-Teile, einer Mischung enthaltend mindestens polybutadienbasiertes Pfropfpolymerisat und mindestens einbutadienfreies Vinyl(co)polymerisat,
C) 1 bis 20 Gew.-Teile ein phosphorhaltiges Flammschutzmittel gemäß Formel Va 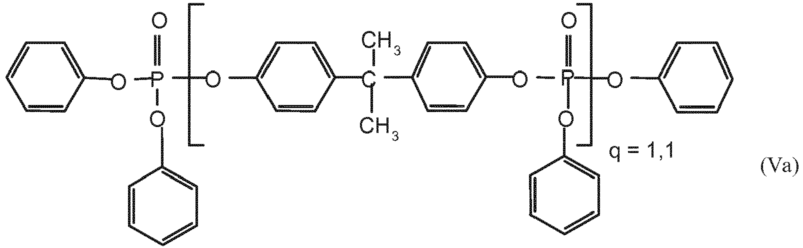
D) 0,1 bis 20,0 Gew.-Teile, Teile (jeweils bezogen auf die Summe der Komponenten A bis C) mindestens eines Polymeradditivs,
wobei der Polybutadiengehalt bezogen auf die Summe der Gewichtsteile der Komponenten A bis C 0,5 bis 5,5 Gew.-% beträgt,
und wobei der Gesamtgehalt an butadienfreiem Vinyl(co)polymerisat aus der Komponente B bezogen auf die Summe der Komponenten A bis C 0,5 bis 5,0 Gew.-% beträgt,
und wobei das Pfropfpolymerisat aus Komponente B bezogen auf das Pfropfpolymerisat, 25 bis 60 Gew.-%, wenigstens ein Vinylmonomeres und 75 bis 40 Gew.-%, eine oder mehrere polybutadienbasierte Pfropfgrundlagen umfasst,
und wobei die Pfropfgrundlage des polybutadienbasierten Pfropfpolymerisats eine mittlere Teilchengröße (dso-Wert) von 0,2 bis 1,0 µm gemessen durch Ultrazentrifugentechnik aufweist,
und wobei die Zusammensetzungen frei sind von thermoplastischen Polyestern wie Polyalkylenterephthlaten,
und wobei die Summe der Gewichtsteile der Komponenten A, B und C in der Polycarbonatzusammensetzung auf 100 normiert ist.

In einer weiteren bevorzugten Ausführungsform enthalten die Polycarbonatzusammensetzungen
A) 73 bis 95 Gew.-Teile mindestens eines Polymers ausgewählt aus der Gruppe bestehend aus aromatisches Polycarbonat und aromatisches Polyestercarbonat,
B) 3 bis 10 Gew.-Teile, einer Mischung enthaltend mindestens polybutadienbasiertes Pfropfpolymerisat und mindestens ein butadienfreies Vinyl(co)polymerisat,
   wobei das
C) 2 bis 18 Gew.-Teile ein phosphorhaltiges Flammschutzmittel gemäß Formel Va 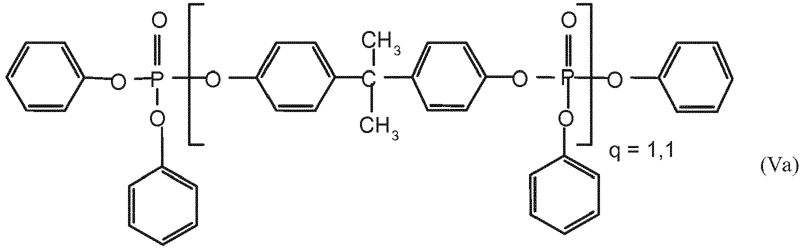
D) 0,3 bis 10 Gew.-Teile (jeweils bezogen auf die Summe der Komponenten A bis C) mindestens eines Polymeradditivs,
wobei der Polybutadiengehalt bezogen auf die Summe der Gewichtsteile der Komponenten A bis C 1,5 bis 5,5 Gew.-% beträgt,
und wobei der Gesamtgehalt an butadienfreiem Vinyl(co)polymerisat aus der Komponente B bezogen auf die Summe der Komponenten A bis C 1,0 bis 4,5 Gew.-% beträgt,
und wobei das Pfropfpolymerisat aus Komponente B bezogen auf das Pfropfpolymerisat, 25 bis 60 Gew.-%, wenigstens ein Vinylmonomeres und 75 bis 40 Gew.-%, eine oder mehrere polybutadienbasierte Pfropfgrundlagen umfasst,
und wobei das Pfropfpolymerisat durch Emulsionspolymerisation hergestellt wird
und wobei die Pfropfgrundlage des polybutadienbasierten Pfropfpolymerisats eine mittlere Teilchengröße (d₅₀-Wert) von 0,2 bis 0,5 µm gemessen durch Ultrazentrifugentechnik aufweist,und
wobei die Zusammensetzungen frei sind von thermoplastischen Polyestern wie Polyalkylenterephthlaten,
In einer bevorzugten Ausführungsform bestehen die Polycarbonatzusammensetzungen nur aus den Komponenten A, B, C und D.

Ferner und bevorzugt wird die Aufgabe der vorliegenden Erfindung gelöst durch Verbundbauteile umfassend
a) einen Träger aus einer wie oben genannten Polycarbonatzusammensetzung
b) mindestens eine Polyurethanschicht.

Die Polyurethanschicht kann dabei beispielsweise ein PU-Lack, ein PU-Schaum oder aber eine kompakte PU-Haut darstellen mit Polyurethanschichtdicken von beispielsweise 1 µm bis zu 20 cm.

In einer bevorzugten Ausführungsform handelt es sich bei der Polyurethanschicht um einen Lack mit einer Schichtdicke von 1 - 1000 µm, weiter bevorzugt 10 - 500 µm und besonders bevorzugt 50 - 300 µm.

In einer weiteren bevorzugten Ausführungsform handelt es sich bei der Polyurethanschicht um einen Schaum mit einer Schichtdicke von 1 mm - 20 cm, weiter bevorzugt 1 mm - 10 cm und besonders bevorzugt 1 mm - 1 cm.

In einer weiteren bevorzugten Ausführungsform handelt es sich bei der Polyurethanschicht um eine kompakte Haut mit einer Schichtdicke von 0,5 mm - 10,0 mm, bevorzugt 0,5 mm - 5,0 mm und besonders bevorzugt 1,0 mm - 4,0 mm.

Die Verbundbauteile können grundsätzlich in jeder bekannten Weise hergestellt werden.

Bevorzugt wird die Polyurethanschicht hergestellt durch Auspolymerisation eines reaktiven Polyurethanrohstoffgemischs enthaltend
- mindestens eine Polyisocyanat-Komponente,
- mindestens eine polyfunktionelle H-aktive Verbindung, und
- optional mindestens ein Polyurethan-Additiv und/oder Prozesshilfsstoff
in direktem Kontakt mit dem zuvor aus der thermoplastischen Zusammensetzung geformten und erstarrten Träger.

Das Trägerbauteil kann beispielsweise aus der thermoplastischen PC+ABS-Zusammensetzung vorgefertigt und darauf das reaktive Polyurethanrohstoffgemisch aufgebracht und ausreagiert werden. Je nach Reaktivität der Polyurethanreaktionskomponenten können diese bereits vorgemischt sein oder während des Auftragens in bekannter Weise vermischt werden. Das Auftragen kann unter anderem durch Sprühen, Rakeln oder Kalandrieren erfolgen.

Für den Fall, dass geschäumte Verbunde hergestellt werden sollen, kann in an sich bekannter Weise das Reaktionsgemisch in eine Form enthaltend das vorab geformte und erstarrte Trägerbauteil eingetragen werden. Optional kann die Form auch eine weitere Dekorschicht (oft "Haut" genannt) aus z.B. Polyvinylchorid (PVC), thermoplastischen Polyolefinen (TPO), thermoplastischen Polyurethan (TPU) oder Polyurethansprühhaut enthalten. In der Form schäumt das schäumfähige Reaktionsgemisch in Kontakt mit dem Trägerbauteil und gegebenenfalls der Dekorschicht auf und bildet das Verbundbauteil. Die Formverschäumung kann dabei so durchgeführt werden, dass das Verbundbauteil an seiner Oberfläche eine Zellstruktur aufweist. Sie kann aber auch so durchgeführt werden, dass das Verbundbauteil eine kompakte Haut und einen zelligen Kern aufweist (Integralschaumstoffe). Die Polyurethankomponenten können mit Hockdruck- oder Niederdruckmaschinen in die Form eingebracht werden. Polyurethanschaumstoffe können auch als Block-Schaumstoff hergestellt werden.

Die Herstellung von Polyurethan-Verbundkörpern kann auch in Sandwichbauweise erfolgen. Das Verfahren kann dabei sowohl als Depot- oder Hüllbauverfahren ausgestattet sein. Sowohl die Depotbauweise als auch die Hüllbauweise sind an sich bekannt. Im Depotverfahren (Füllbauweise) werden zwei Halbschalen (z.B. Deckschichten aus Kunststoffen) vorgefertigt, in ein Werkzeug eingelegt und der Hohlraum zwischen den Schalen mit dem PUR-Schaum ausgeschäumt. In der Hüllbauweise wird ein Kern aus PUR-Schaum in einem Werkzeug vorgelegt und dann mit einem geeigneten Hüllmaterial, z.B. mit einem der genannten Thermoplasten, umhüllt. Bei der Herstellung der Sandwich-Verbundkörper ist die Hüllbauweise bevorzugt.

In einer bevorzugten Ausführungsform der Erfindung werden die Verbundbauteile herstellt durch ein Verfahren in dem
(i) in einem ersten Verfahrensschritt die Schmelze der thermoplastischen Zusammensetzung in eine erste Werkzeugkavität eingespritzt und nachfolgend abgekühlt wird,
(ii) in einem zweiten Verfahrensschritt das thermoplastische Bauteil in eine größere Kavität überführt und dadurch ein definierter Spaltraum erzeugt wird,
(iii) im dritten Verfahrensschritt in den so resultierenden Spaltraum zwischen dem thermoplastischen Bauteil und der Werkzeugoberfläche der vergrößerten Kavität ein reaktives Polyurethanrohstoffgemisch enthaltend
   - mindestens eine Polyisocyanat-Komponente,
   - mindestens eine polyfunktionelle H-aktive Verbindung, und
   - optional mindestens ein Polyurethan-Additiv und/oder Prozesshilfsstoff gespritzt wird, wobei das Polyurethanrohstoffgemisch im direkten Kontakt mit der Oberfläche des thermoplastischen Trägers zu einer kompakten Polyurethanschicht oder zu einer Polyurethanschaumschicht auspolymerisiert, und
(iv) im vierten Verfahrensschritt das Verbundbauteil aus der Werkzeugkavität entformt wird.

In einer weiter bevorzugten Ausführungsform der Erfindung folgen die Verfahrensschritte (i) bis (iv) bei der Verbundbauteilherstellung unmittelbar aufeinander.

Bei Bedarf wird die größere Kavität vor dem Verfahrensschritt (iii) mit einem Trennmittel behandelt.

Durch die unmittelbare Abfolge der Verfahrensschritte wird verhindert, dass die Temperatur des Werkstücks während des Prozesses auf Raumtemperatur abkühlt. Hierdurch wird eine Reduktion der Herstellungszeiten und eine höhere Energieeffizienz des Gesamtverfahrens erreicht.

Die Verfahrensschritte (ii) und (iii) können unter Variation des Polyurethansystems mindestens einmal wiederholt werden, wobei nur auf einer oder beiden Seiten des Trägers ein oder mehrere Polyurethanschichten aufgebracht werden, so dass ein Verbundbauteil aus thermoplastischem Träger und mindestens zwei gleichen oder unterschiedlichen PU-Komponenten mit gegebenenfalls auch mehr als zweischichtigem Aufbau resultiert.

Vor dem Entformen des Werkstücks in den Schritten (ii) und (iv) wird das Werkstück bis zur Formstabilität abgekühlt.

Zur Erzeugung des Spaltraums in Verfahrensschritt (ii) kann entweder das Spritzgusswerkzeug geöffnet und nachfolgend eine Hälfte der Spritzgusswerkzeugkavität durch eine neue Hälfte mit größeren Hohlformmaßen ausgetauscht, oder das Bauteil von der ersten Werkzeugkavität in eine zweite, hinsichtlich seiner Hohlformmaße größeren Kavität desselben oder eines zweiten Werkzeugs umgesetzt, oder die erste Kavität um ein Spaltmaß geöffnet werden.

Das Umsetzen des Substrats im Verfahrensschritt (ii) kann nach bekannten Verfahren, wie sie beispielsweise beim Mehrfarbenspritzgießen angewendet werden, erfolgen. Typische Verfahren sind einerseits das Umsetzen mit Drehteller, Wendeplatte, Schiebekavität oder Indexplatte oder vergleichbare Verfahren, bei denen das Substrat auf einem Kern verbleibt. Verbleibt das Substrat zum Umsetzen auf dem Kern, hat dies den Vorteil, dass die Lage auch nach dem Umsetzen passgenau definiert ist. Andererseits sind aus dem Stand der Technik Verfahren zum Umsetzen eines Substrats bekannt, bei denen das Substrat, z.B. mit Hilfe eines Handhabungssystems, aus einer Kavität entnommen und in eine andere Kavität eingelegt wird. Das Umsetzen mit Entnahme des Substrats bietet größeren Gestaltungsspielraum bei der Beschichtung, z.B. bei der Generierung eines Umbugs oder maskierter Bereiche.

In einer bevorzugten Ausführungsform wird im ersten Verfahrensschritt eine thermoplastische Polymerzusammensetzung verwendet, die bei Raumtemperatur ein zähes Bruchverhalten im Kerbschlagversuch nach ISO 180-1A, gekennzeichnet durch einen Kerbschlagzähigkeitswert von größer als 25 kJ/m² zeigt und zusätzlich die Flammwidrigkeitsklasse V1 oder V0 bei 1 mm Probendicke gemessen gemäß UL 94-V erfüllt..

Die bei der Herstellung der erfindungsgemäßen Verbundbauteile eingesetzten reaktiven Polyurethanrohstoffgemische weisen bevorzugt eine Kennzahl von > 80 bis < 125, weiter bevorzugt > 90 bis < 120, und besonders bevorzugt von 100 bis 110 auf.

Die Kennzahl ist definiert als prozentuales Verhältnis der tatsächlich eingesetzten Isocyanat-Menge zur berechneten stöchiometrischen Menge bei kompletter Umsetzung mit der H-aktiven polyfunktionellen Komponente, d.h. Kennzahl = (Isocyanat-Menge eingesetzt / Isocyanat-Menge stöchiometrisch, berechnet) ^{∗} 100.

In einer alternativen Ausführungsform kann anstelle des reaktiven Polyurethanrohstoffgemisches auch ein thermoplastisches Polyurethan verwendet werden.

In einer weiteren bevorzugten Ausführungsform wird die mit der thermoplastischen Polymerzusammensetzung in Kontakt stehende Oberfläche des Spritzgusswerkzeuges im Verfahrensschritt (iii) auf eine Temperatur im Bereich 50 bis 100°C, bevorzugt 55 bis 95°C, und besonders bevorzugt 60 bis 90°C temperiert.

In einer weiteren bevorzugten Ausführungsform wird die mit dem reaktiven Polyurethangemisch in Kontakt stehende Oberfläche des Spritzgusswerkzeuges im Verfahrensschritt (iii) auf eine Temperatur im Bereich 50 bis 160°C, bevorzugt 50 bis 120°C, weiter bevorzugt 60 bis 110°C, und besonders bevorzugt 60 bis 90 °C temperiert.

In einer weiter bevorzugten Ausführungsform wird die mit der thermoplastischen Polymerzusammensetzung in Kontakt stehende Oberfläche des Spritzgusswerkzeuges im Verfahrensschritt (iii) auf eine Temperatur im Bereich 50 bis 100°C, bevorzugt 55 bis 95°C, und besonders bevorzugt 60 bis 90°C temperiert und die mit dem reaktiven Polyurethangemisch in Kontakt stehende Oberfläche des Spritzgusswerkzeuges auf eine Temperatur im Bereich 50 bis 160°C, bevorzugt 50 bis 120°C, weiter bevorzugt 60 bis 110°C, und besonders bevorzugt 60 bis 90 °C temperiert.

Sofern es sich um ein geschäumtes Polyurethansystem mit Dekorschicht handelt, kann in einer alternativen Ausführungsform die mit der thermoplastischen Polymerzusammensetzung bzw. mit der Dekorhaut in Kontakt stehende Oberfläche des Verschäumungswerkzeugs auf eine Temperatur im Bereich 20 bis 80°C, bevorzugt 30 bis 60°C temperiert werden.

Die erfindungsgemäßen Verbundbauteile eignen sich besonders als Innen- oder Außenbauteil eines Schienen-, Luftfahrt- oder Kraftfahrzeuges sowie für Elektro/Elektronikbauteile- und IT Bauteile.

Die Verbund-Haftung zwischen dem Träger aus Polycarbonat-Zusammensetzung und der Polyurethan-Beschichtung in den erfindungsgemäßen Verbundbauteilen beträgt in bevorzugter Ausführungsform mindestens 1 N/mm gemessen an aus dem Bauteil entnommenen Streifenproben mit einer Breite von 20 mm in einem Rollenschälversuch gemäß DIN EN 1464 mit einer Traversenvorschubgeschwindigkeit von 100 mm/min.

Die im erfindungsgemäßen Verfahren zum Einsatz kommenden Polymer-Zusammensetzungen enthalten:

### Komponente A

Erfindungsgemäß geeignete aromatische Polycarbonate und Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate und Polyestercarbonate erfolgt z. B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 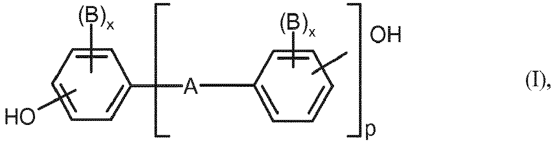 wobei
- A: eine Einfachbindung, C₁ bis C₅-Alkylen, C₂ bis C₅-Alkyliden, C₅ bis C₆-Cycloalkyliden,-O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 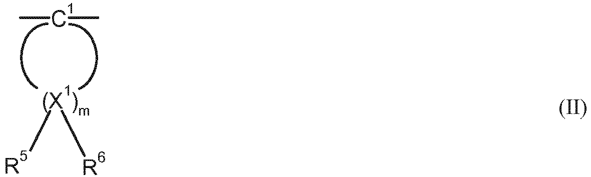 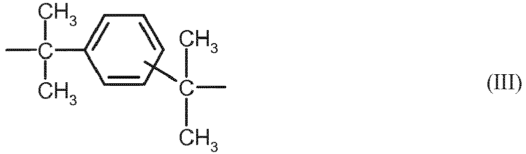
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenontetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt bevorzugt im Bereich 1,18 bis 1,4, besonders bevorzugt im Bereich 1,20 bis 1,32 (gemessen an Lösungen von 0,5 g Polycarbonat oder Polyestercarbonat in 100 ml Methylenchlorid-Lösung bei 25°C). Das gewichtsgemittelte Molekulargewicht Mw der aromatischen Polycarbonate und Polyestercarbonate liegt bevorzugt im Bereich von 15.000 bis 35.000, weiter bevorzugt im Bereich von 20.000 bis 33.000, besonders bevorzugt 23.000 bis 30.000, bestimmt durch GPC (Gelpermeationschromatographie in Methylenchlorid mit Polycarbonat als Standard).

### Komponente B

Bei der Komponente B handelt es sich um polybutadienbasierte Pfropfpolymerisate oder um Mischungen aus polybutadienbasierte Pfropfpolymerisate mit butadienfreien Vinyl(Co)Polymerisaten, wobei der Butadiengehalt der Komponente B mindestens 25,0 Gew.-% beträgt.

In Komponente B zum Einsatz kommende polybutadienbasierte Pfropfpolymerisate umfassen
B.1 5 bis 95, vorzugsweise 15 bis 92, insbesondere 25 bis 60 Gew.-%, bezogen auf das Pfropfpolymerisat, wenigstens eines Vinylmonomeren auf
B.2 95 bis 5, vorzugsweise 85 bis 8, insbesondere 75 bis 40 Gew.-%, bezogen auf das Pfropfpolymerisat, einer oder mehrerer polybutadienbasierender Pfropfgrundlagen.

Die Pfropfgrundlage B.2 hat im Allgemeinen eine mittlere Teilchengröße (dso-Wert) von 0,05 bis 10,00 µm, vorzugsweise 0,1 bis 5,0 µm, besonders bevorzugt 0,2 bis 1,0 µm, und ganz besonders bevorzugt 0,2 bis 0,5 µm

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Monomere B.1 sind vorzugsweise Gemische aus
B.1.1 50 bis 99, bevorzugt 65 bis 85, insbesondere 75 bis 80 Gew.-%, bezogen auf B.1, Vinylaromaten und/oder kernsubstituierten Vinylaromaten (wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und
B.1.2 1 bis 50, bevorzugt 15 bis 35, insbesondere 20 bis 25 Gew.-%, bezogen auf B.1, Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril.

Für die Pfropfpolymerisate in Komponente B geeignete Pfropfgrundlagen B.2 sind reine Polybutadienkautschuke
oder Gemische von Polybutadienkautschuken oder Copolymerisate von Polybutadienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb < 10°C, vorzugsweise < 0°C, besonders bevorzugt < -20°C liegt.

Die Glasübergangstemperatur wurde mittels dynamischer Differenz-Thermoanalyse (DSC) gemäß der Norm DIN EN 61006 bei einer Heizrate von 10 K/min mit Definition der T_{g} als Mittelpunkttemperatur (Tangentenmethode) bestimmt.

Besonders bevorzugt als Pfropfgrundlage B.2 ist reiner Polybutadienkautschuk.

Besonders bevorzugte Polymerisate in Komponente B sind beispielsweise ABS- oder MBS-Polymerisate, wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate in Komponente B werden durch radikalische Polymerisation, z.B. durch Emulsions-, Suspensions-, Lösungs- oder Massepolymerisation, insbesondere durch Emulsionspolymerisation hergestellt.

Bei Pfropfpolymerisaten in Komponente B, die im Emulsionspolymerisationsverfahren herstellt wurden, beträgt der Gehalt an Pfropfgrundlage B.2 bevorzugt 20 bis 95 Gew.-%, besonders bevorzugt 40 bis 85 Gew.-%, insbesondere 50 bis 75 Gew.-%, jeweils bezogen auf das Pfropfpolymerisat.

Der Gelanteil der Pfropfgrundlage B.2 beträgt mindestens 30 Gew.-%, vorzugsweise mindestens 40 Gew.-%, insbesondere mindestens 60 Gew.-%, jeweils bezogen auf B.2 und gemessen als unlöslicher Anteil in Toluol.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten in Komponente B auch solche Produkte verstanden, die durch (Co)Polymerisation der Pfropfmonomere B.1 in Gegenwart der Pfropfgrundlage B.2 gewonnen werden und bei der Aufarbeitung mit anfallen. Diese Produkte können demnach auch freies, d.h. nicht chemisch an das Polybutadien gebundenes (Co)Polymerisat der Pfropfmonomere B.1 enthalten.

Der Gelgehalt der Pfropfgrundlage B.2 bzw. der Pfropfpolymere in Komponente B wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Bei den butadienfreien Vinyl(Co)Polymerisaten in Komponente B handelt es sich vorzugsweise um butadienfreie Homo- und/oder Copolymerisate B.1 von mindestens einem Monomeren aus der Gruppe der Vinylaromaten, Vinylcyanide (ungesättigte Nitrile), (Meth)Acrylsäure-(C₁ bis C₈)-Alkylester, ungesättigten Carbonsäuren sowie Derivaten (wie Anhydride und Imide) ungesättigter Carbonsäuren.

Diese (Co)Polymerisate B.1 sind harzartig, thermoplastisch und butadienfrei. Besonders bevorzugt ist das Copolymerisat aus B.1.1 Styrol und B.1.2 Acrylnitril.

Derartige (Co)Polymerisate B.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch GPC) zwischen 15.000 g/mol und 250.000 g/mol, bevorzugt im Bereich 80.000 bis 150.000 g/mol.

### Komponente C

Phosphorhaltige Flammschutzmittel C im erfindungsgemäßen Sinne sind ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können.

Mono- und oligomere Phosphor- bzw. Phosphonsäureester in Sinne dieser Erfindung sind Phosphorverbindungen der allgemeinen Formel (V) 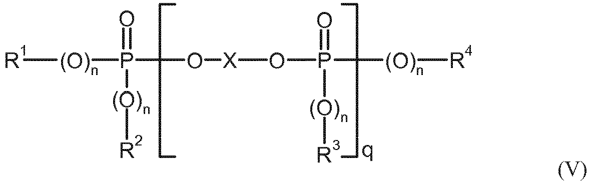 worin
R1, R2, R3 und R4, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C12-Aralkyl,
n unabhängig voneinander, 0 oder 1,
q 0 bis 30 und
X einen mehrkernigen aromatischen Rest mit 12 bis 30 C-Atomen, oder einen linearen oder verzweigten aliphatischen Rest mit 2 bis 30 C-Atomen, der OH-substituiert sein und bis zu acht Etherbindungen enthalten kann, bedeuten.

Bevorzugt stehen R1, R2, R3 und R4 unabhängig voneinander für C1 bis C4-Alkyl, Phenyl, Naphthyl oder Phenyl-C1-C4-alkyl. Die aromatischen Gruppen R1, R2, R3 und R4 können ihrerseits mit Halogen- und/oder Alkylgruppen, vorzugsweise Chlor, Brom und/oder C1 bis C4-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
X in der Formel (V) bedeutet bevorzugt einen mehrkernigen aromatischen Rest mit 12 bis 30 C-Atomen. Dieser leitet sich bevorzugt von Diphenolen der Formel (I) ab.
n in der Formel (V) kann, unabhängig voneinander, 0 oder 1 sein, vorzugsweise ist n gleich 1.
q steht für ganzzahlige Werte von 0 bis 30, bevorzugt 0 bis 20, besonders bevorzugt 0 bis 10, im Falle von Mischungen für Durchschnittswerte von 0,8 bis 5,0, bevorzugt 1,0 bis 3,0, weiter bevorzugt 1,05 bis 2,00, und besonders bevorzugt von 1,08 bis 1,60.
X steht besonders bevorzugt für 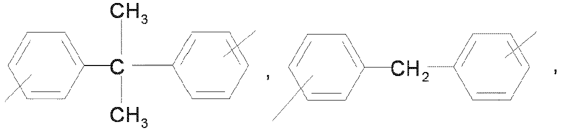 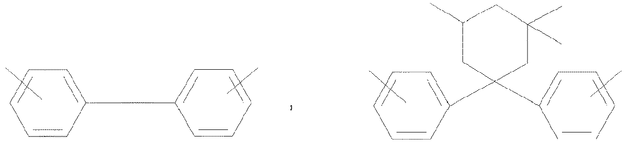 oder deren chlorierte oder bromierte Derivate, insbesondere leitet sich X von Bisphenol A oder Diphenylphenol ab. Besonders bevorzugt leitet sich X von Bisphenol A ab. Phosphorverbindungen der Formel (V) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, und Bisphenol A verbrücktes Oligophosphat. Der Einsatz von oligomeren Phosphorsäureestern der Formel (V), die sich vom Bisphenol A ableiten, ist insbesondere bevorzugt.

Höchst bevorzugt als Komponente C ist Bisphenol-A basierendes Oligophosphat gemäß Formel (Va).

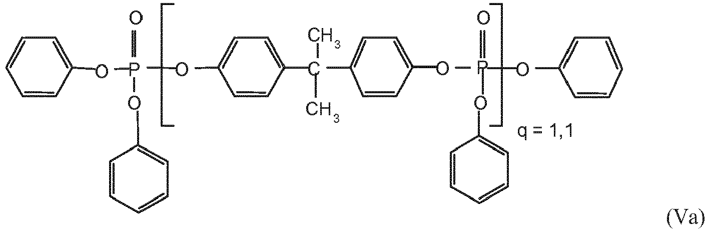

Die Phosphorverbindungen gemäß Komponente C sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Als erfindungsgemäße Komponente C können auch Mischungen von Phosphaten mit unterschiedlicher chemischer Struktur und/oder mit gleicher chemischer Struktur und verschiedenem Molekulargewicht eingesetzt werden.

Vorzugsweise werden Mischungen mit gleicher Struktur und unterschiedlicher Kettenlänge verwendet, wobei es sich bei dem angegebenen q-Wert um den mittleren q-Wert handelt. Der mittlere q-Wert wird bestimmt, indem mittels High Pressure Liquid Chromatography (HPLC) bei 40°C in einem Gemisch aus Acetonitril und Wasser (50:50) die Zusammensetzung der Phosphorverbindung (Molekulargewichtsverteilung) bestimmt wird und daraus die Mittelwerte für q berechnet werden. Weiterhin können Phosphonatamine und Phosphazene, wie sie in WO 00/00541 und WO 01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

Wenn die erfindungsgemäßen Zusammensetzungen flammhemmend ausgestattet sind, ist vorzugsweise zusätzlich ein Antidrippingmittel, vorzugsweise Polytetrafluorethylen (PTFE), enthalten.

### Komponente D

Die Zusammensetzung kann als Komponente D handelsübliche Polymeradditive enthalten. Als handelsübliche Polymeradditive gemäß Komponente D kommen Additive wie Flammschutzsynergisten, Antidrippingmittel (beispielsweise Verbindungen der Substanzklassen der fluorierten Polyolefine, der Silikone sowie Aramidfasern), interne und externe Gleit- und Entformungsmittel (beispielsweise Pentaerythrittetrastearat, Stearylstearat, Montanwachs oder Polyethylenwax), Fließfähigkeitshilfsmittel, Antistatika (beispielsweise Blockcopolymere aus Ethylenoxid und Propylenoxid, andere Polyether oder Polyhydroxyether, Poletheramide, Polyesteramide oder Sulfonsäuresalze), Leitfähigkeitsadditive (beispielsweise Leitruß oder Carbon Nanotubes), Stabilisatoren (beispielsweise UV/Licht-Stabilisatoren, Thermostabilisatoren, Antioxidantien, Hydrolyseschutzmittel), antibakteriell wirkende Additive (beispielsweise Silber oder Silbersalze), kratzfestigkeitsverbessernde Additive (beispielsweise Silikonöle oder harte Füllstoffe wie Keramik(hohl)kugeln), IR-Absorbentien, optische Aufheller, fluoreszierende Additive, sowie Farbstoffe und Pigmente (beispielsweise Ruß, Titandioxid oder Eisenoxid), Schlagzähmodifikatoren, die nicht unter die Definition von B fallen und Brönstedt-saure Verbindungen als Basenfänger, oder aber Mischungen mehrerer der genannten Additive in Frage.

Insbesondere wird als Antidrippingmittel Polytetrafluorethylen (PTFE) oder PTFE-haltige Zusammensetzungen wie beispielsweise Masterbatche von PTFE mit styrol- oder methylmethacrylat enthaltenden Polymeren oder Copolymeren, als Pulver oder als koagulierte Mischung, z.B. mit Komponente B eingesetzt.

Die als Antidrippingmittel eingesetzten fluorierten Polyolefine sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1000, vorzugsweise 0,08 bis 20 µm. Im allgemeinen haben die fluorierten Polyolefine eine Dichte von 1,2 bis 2,3 g/cm³. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, No. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Geeignete, in Pulverform einsetzbare fluorierte Polyolefine D sind Tetrafluorethylenpolymerisate mit mittleren Teilchendurchmesser von 100 bis 1000 µm und Dichten von 2,0 g/cm³ bis 2,3 g/cm³. Geeignete Tetrafluorethylenpolymerisat-Pulver sind handelsübliche Produkte und werden beispielsweise von der Fa. DuPont unter dem Handelsnamen Teflon® angeboten.

Besonders bevorzugt enthalten die erfindungsgemäßen Zusammensetzungen mindestens ein Entformungsmittel, vorzugsweise Pentaerythrittetrastearat in Gew.-Anteilen von 0,1 bis 1,0 % bezogen auf die Summe der Komponenten A bis D und mindestens einen Stabilisator, vorzugsweise ein phenolisches Antioxidanz , besonders bevorzugt 2,6-Di-tert-butyl-4-(octadecanoxycarbonylethyl)-phenol in Gew.-Anteilen von 0,01 bis 1,0 % bezogen auf die Summe der Komponenten A bis D.

Weiter bevorzugt wird eine Stabilisatorkombination aus mindestens zwei Stabilisatoren eingesetzt, wobei der zweite Stabilisator eine Brönstedt-saure Verbindung in Gew.-Anteilen von 0,01 bis 1,0 % bezogen auf die Summe der Komponenten A bis D enthält. Vorzugsweise handelt es sich bei dem zweiten Stabilisator um Phosphorsäure, wässrige Phosphorsäurelösung oder um eine rieselfähige Abmischung aus Phosphorsäure oder einer wässrigen Phosphorsäurelösung mit einem feinteiligen hydrophilen Silicagel in Gew.-Anteilen von 0,01 bis 1,0 % bezogen auf die Summe der Komponenten A bis D.

Weiter bevorzugt ist als Additiv auch Zitronensäure in Gew.-Anteilen von 0,05 bis 1,0 % bezogen auf die Summe der Komponenten A bis D.

Die Zusammensetzungen enthalten in einer bevorzugten Ausführungsform als Komponente D keine Füll und Verstärkungsstoffe wie beispielsweise Talk, Glas- oder Karbonfasern (ggf. auch gemahlen), Glas- oder Keramik(hohl)kugeln, Glimmer, Kaolin, CaCO3 und Glasschuppen

### Polyurethanschicht

Als Polyurethanschicht wird vorzugsweise ein Polyurethanschaum oder eine kompakte Polyurethanschicht eingesetzt.

Die erfindungsgemäß zum Einsatz kommenden Polyurethane erhält man durch Umsetzung von Polyisocyanaten mit H-aktiven polyfunktionellen Verbindungen, vorzugsweise Polyolen.

Dabei werden unter dem Begriff "Polyurethan" im Rahmen dieser Erfindung auch Polyurethanharnstoffe verstanden, bei denen als H-aktive polyfunktionelle Verbindungen solche Verbindungen mit N-H-Funktionalität gegebenenfalls in Abmischung mit Polyolen zum Einsatz kommen.

Geeignete Polyisocyanate sind die dem Fachmann an sich bekannten aromatischen, araliphatischen, aliphatischen oder cycloaliphatischen Polyisocyanate einer NCO-Funktionalität von bevorzugt ≥ 2, welche auch Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen können. Diese können einzeln oder in beliebigen Mischungen untereinander eingesetzt werden.

Die vorstehend genannten Polyisocyanate basieren dabei auf dem Fachmann an sich bekannten Di- bzw. Triisocyanaten mit aliphatisch, cycloaliphatisch, araliphatisch und/oder aromatisch gebundenen Isocyanatgruppen, wobei es unerheblich ist, ob diese unter Verwendung von Phosgen oder nach phosgenfreien Verfahren hergestellt wurden. Beispiele für solche Di- bzw. Triisocyanate sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur® W, Bayer AG, Leverkusen, DE), 4-Isocyanatomethyl-1,8-octandiisocyanat (Triisocyanatononan, TIN), ω,ω'-Diisocyanato-1,3-dimethylcyclohexan (H₆XDI), 1-Isocyanato-1-methyl-3-isocyanatomethylcyclohexan, 1-Isocyanato-1-methyl-4-isocyanato-methylcyclohexan, Bis-(isocyanatomethyl)-norbornan, 1,5-Naphthalen-diisocyanat, 1,3- und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), polymeres MDI (pMDI) 1,5-Diisocyanatonaphthalin, 1,3-Bis(isocyanato-methyl)benzol (XDI) sowie beliebige Mischungen genannter Verbindungen.

Bevorzugt weisen die Polyisocyanate dabei eine mittlere NCO-Funktionalität von 2,0 bis 5,0, bevorzugt von 2,2 bis 4,5, besonders bevorzugt von 2,2 bis 2,7 und einen Gehalt an Isocyanatgruppen von 5,0 bis 37,0 Gew.-%, bevorzugt von 14,0 bis 34,0 Gew.-% auf.

In einer bevorzugten Ausführungsform werden Polyisocyanate oder Polyisocyanatgemische der vorstehend genannten Art mit ausschließlich aliphatisch und/oder cycloaliphatisch gebundenen Isocyanatgruppen eingesetzt.

Ganz besonders bevorzugt basieren die Polyisocyanate der vorstehend genannten Art auf Hexamethylendiisocyanat, Isophorondiisocyanat, den isomeren Bis-(4,4'-isocyanatocyclohexyl)methanen sowie deren Mischungen.

Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 15.000, vorzugsweise 600 bis 12.000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 62 bis 599, vorzugsweise 62 bis 200, wie z.B. Ethylenglykol, Trimethylolpropan, Propandiol-1,2 oder Butandiol-1,4 oder Butandiol-2,3, insbesondere jedoch höhermolekulare Polyetherpolyole und/oder Polyesterpolyole der aus der Polyurethanchemie an sich bekannten Art mit Molekulargewichten von 600 bis 12.000, vorzugsweise 800 bis 4.000, die mindestens zwei, in der Regel 2 bis 8, vorzugsweise aber 2 bis 6 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind.

Zur Herstellung der NCO-Prepolymeren geeignete Verbindungen mit gegenüber Isocyanatgruppen reaktionsfähigen Gruppen, insbesondere Hydroxylgruppen, sind beispielsweise die in der US-A 4 218 543 offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO-Überschusses zur Umsetzung gebracht. Die NCO-Prepolymeren weisen im Allgemeinen einen NCO-Gehalt von 10 bis 26 vorzugsweise 15 bis 26 Gew.-% auf. Hieraus geht bereits hervor, dass im Rahmen der vorliegenden Erfindung unter "NCO-Prepolymeren" bzw. unter "Prepolymeren mit endständigen Isocyanatgruppen" sowohl die Umsetzungsprodukte als solche als auch die Gemische mit überschüssigen Mengen an nicht umgesetzten Ausgangspolyisocyanaten, die oft auch als "Semiprepolymere" bezeichnet werden, zu verstehen sind.

Als aliphatische Diole mit einer OH-Zahl von >500 mg KOH/g kommen die üblicherweise in der Polyurethanchemie verwendeten Kettenverlängerer in Betracht wie Ethylenglykol, Diethylenglykol, Propylenglykol, Dipropylenglykol, Butandiol-1,4, Propandiol-1,3. Bevorzugt sind Diole wie 2-Butandiol-1,4, Butendiol-1,3, Butandiol-2,3 und/oder 2-Methylpropandiol-1,3. Selbstverständlich ist es auch möglich, die aliphatischen Diole im Gemisch untereinander einzusetzen.

Als H-aktive Komponente eignen sich Polyole mit einer mittleren OH-Zahl von 5 bis 600 mg KOH/g und einer mittleren Funktionalität von 2 bis 6. Erfindungsgemäß geeignete Polyole stellen beispielsweise Polyhydroxypolyether dar, die durch Alkoxylierung geeigneter Startermoleküle wie Ethylenglykol, Diethylenglykol, 1,4-Dihydroxybutan, 1,6-Dihydroxyhexan, Dimethylolpropan, Glycerin, Pentaerythrit, Sorbit oder Saccharose zugänglich sind. Als Starter können ebenfalls fungieren Ammoniak oder Amine wie Ethylendiamin, Hexamethylendiamin, 2,4-Diaminotoluol, Anilin oder Aminoalkohole oder Phenole wie Bisphenol-A. Die Alkoxylierung erfolgt unter Verwendung von Propylenoxid und/oder Ethylenoxid in beliebiger Reihenfolge oder als Gemisch.

Neben Polyolen kann zusätzlich mindestens ein weiterer Vernetzer und/oder Kettenverlängerer enthalten sein ausgewählt aus der Gruppe, die Amine und Aminoalkohole, beispielsweise Ethanolamin, Diethanolamin, Diisopropanolamin, Ethylendiamin, Triethanolamin, Isophrondiamin, N,N'-dimethyl(diethyl)-ethylendiamin, 2-amino-2-methyl (oder ethyl)-1-propanol, 2-Amino-1-butanol, 3-Amino-1,2-propandiol, 2-Amino-2-methyl(ethyl)-1,3-propandiol, und Alkohole, beispielsweise Ethylenglykol, Diethylenglykol, 1,4-Dihydroxybutan, 1,6-Dihydroxyhexan, Dimethylolpropan, Glycerin und Pentaerythrit, sowie Sorbit und Saccharose, oder Gemische dieser Verbindungen enthält.

Ferner geeignet sind Polyesterpolyole, wie sie durch Umsetzung niedermolekularer Alkohole mit mehrwertigen Carbonsäuren wie Adipinsäure, Phthalsäure, Hexahydrophthalsäure, Tetrahydrophthalsäure oder den Anhydriden dieser Säuren in an sich bekannter Weise zugänglich sind, sofern die Viskosität der H-aktiven Komponente nicht zu groß wird. Ein bevorzugtes Polyol, das Estergruppen aufweist, ist Rizinusöl. Daneben sind auch Zubereitungen mit Rizinusöl, wie sie durch Auflösung von Harzen, z.B. von Aldehyd-Keton-Harzen, erhalten werden können, sowie Modifikationen von Rizinusöl und Polyole auf Basis anderer natürlicher Öle geeignet.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxyverbindungen werden in an sich bekannter Weise z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen lässt. Es ist aber auch möglich, eine fertige wässrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für die Herstellung von Polyurethanen geeignet. Bei Verwendung von Polyetherpolyolen, welche gemäß DE-A 2 442 101, DE-A 2 844 922 und DE-A 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit.

Vertreter der genannten, als H-aktiven Verbindungen zu verwendenden Verbindungen sind z.B. in High Polymers, Vol. XVI, "Polyurethanes Chemistry and Technology", Saunders-Frisch (Hrg.) Interscience Publishers, New York, London, Bd. 1, S. 32-42, 44,54 und Bd. II, 1984, s. 5-6 und S. 198-199 beschrieben.

Es können auch Gemische der aufgezählten Verbindungen eingesetzt werden.

Die Begrenzung der mittleren OH-Zahl und mittleren Funktionalität der H-aktiven Komponente ergibt sich insbesondere aus der zunehmenden Versprödung des resultierenden Polyurethans. Grundsätzlich sind dem Fachmann aber die Einflussmöglichkeiten auf die polymerphysikalischen Eigenschaften des Polyurethans bekannt, so dass NCO-Komponente, aliphatisches Diol und Polyol in günstiger Weise aufeinander abgestimmt werden können.

Die Polyurethanschicht (b) kann geschäumt oder massiv, wie z.B. als Lack oder Beschichtung vorliegen.

Zu deren Herstellung können alle an sich bekannten Hilfs- und Zusatzstoffe wie z.B. Trennmittel, Treibmittel, Füllstoffe, Katalysatoren und Flammschutzmittel eingesetzt werden.

Gegebenenfalls als Hilfs- und Zusatzmittel sind dabei zu verwenden:
a) Wasser und/oder leicht flüchtige anorganische oder organische Substanzen als Treibmittel Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel Luft, CO₂ oder N₂O in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden.
b) Katalysatoren
   Bei den Katalysatoren handelt sich beispielsweise um tertiäre Amine (wie Triethylamin, Tributylamin, N-Methylmorpholin, N-Ethylmorpholin, N,N,N',N'-Tetramethylethylendiamin, Pentamethyldiethylentriamin und höhere Homologe, 1,4-Diazabicyclo-(2,2,2)octan, N-Methyl-N'-dimethylaminoethylpiperazin, Bis-(dimethylaminoalkyl)piperazine, N,N-Dimethylbenzylamin, N,N-Dimethylcyclohexylamin, N,N-Diethylbenzylamin, Bis-(N,N-diethylamino-ethyl)adipat, N,N,N',N'-Tetramethyl-1,3-butandiamin, N,N-Dimethyl-β-phenylethylamin, 1,2-Dimethylimidazol, 2-Methylimidazol), monocyclische und bicyclische Amide, Bis-(dialkylamino)alkylether, Amidgruppen (vorzugsweise Formamidgruppen) aufweisende tertiäre Amine, Mannichbasen aus sekundären Aminen (wie Dimethylamin) und Aldehyden, (vorzugsweise Formaldehyd oder Ketonen wie Aceton, Methylethylketon oder Cyclohexanon) und Phenolen (wie Phenol, Nonylphenol oder Bisphenol), gegenüber Isocyanatgruppen aktive Wasserstoffatome aufweisende tertiäre Amine (z.B. Triethanolamin, Triisopropanolamin, N-Methyldiethanolamin, N-Ethyldietanolamin, N,N-Dimethylethanolamin), sowie deren Umsetzungsprodukte mit Alkylenoxiden wie Propylenoxid und/oder Ehtylenoxid, sekundärtertiäre Amine, Silaamine mit Kohlenstoff-Silicium-Bindungen (2,2,4-Trimethyl-2-silamorpholin und 1,3-Diethylaminomethyltetramethyldisiloxan), stickstoffhaltige Basen (wie Tetraalkylammoniumhydroxide), Alkalihydroxide (wie Natriumhydroxid, Alkaliphenolate wie Natriumphenolat), Alkalialkoholate (wie Natriummethylat), und/oder Hexahydrotriazine.
   Die Reaktion zwischen NCO-Gruppen und Zerewitinoff-aktiven Wasserstoffatomen wird in an sich bekannter Weise auch durch Lactame und Azalactame stark beschleunigt, wobei sich zunächst ein Assoziat zwischen dem Lactam und der Verbindung mit acidem Wasserstoff ausbildet.
   Es können auch organische Metallverbindungen, insbesondere organische Zinn- und/oder Bismuthverbindungen, als Katalysatoren verwendet werden. Als organische Zinnverbindungen kommen neben schwefelhaltigen Verbindungen wie Di-n-octyl-zinn-mercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Organische Bismuth-Katalysatoren werden beispielsweise in der Patentanmeldung WO 2004/000905 beschrieben.
   Selbstverständlich können alle oben genannten Katalysatoren als Gemische eingesetzt werden. Von besonderem Interesse sind dabei Kombinationen aus organischen Metallverbindungen und Amidinen, Aminopyridinen oder Hydrazinopyridinen.
   Die Katalysatoren werden in der Regel in einer Menge von etwa 0,001 bis 10 Gew.-%, bezogen auf die Gesamtmenge an Verbindungen mit mindestens zwei gegenüber Isocyanaten reaktionsfähigen Wasserstoffatomen, eingesetzt.
c) Oberflächenaktive Zusatzstoffe wie Emulgatoren und Schaumstabilisatoren.
   Als Emulgatoren kommen z.B. die Natriumsalze von Rizinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Rizinolsäure oder von polymeren Fettsäuren können als oberflächenaktive Zusatzstoffe mitverwendet werden.
   Als Schaumstabilisatoren kommen vor allem Polyethersiloxane, speziell wasserlösliche Vertreter, in Frage. Diese Verbindungen sind im Allgemeinen so aufgebaut, dass ein Copolymerisat aus Ethylenoxid und Propylenoxid mit einem Polydimethylsiloxanrest verbunden ist. Von besonderem Interesse sind vielfach über Allophanatgruppen verzweigte Polysiloxan-Polyoxyalkylen-Copolymere.
d) Reaktionsverzögerer
   Als Reaktionsverzögerer kommen z.B. sauer reagierende Stoffe (wie Salzsäure oder organische Säurehalogenide) in Frage.
e) Additive
   Als PU-Additive kommen beispielsweise Zellregler der an sich bekannten Art (wie Paraffine oder Fettalkohole) oder Dimethylpolysiloxane sowie Pigmente oder Farbstoffe und Flammschutzmittel der an sich bekannten Art (z.B. Tris-chlorethylphosphat, Trikresylphosphat oder Ammoniumphosphat und -polyphosphat), ferner Stabilisatoren gegen Alterungs- und Witterungseinflüsse, Weichmacher und fungistatisch und bakteriostatisch wirkende Substanzen sowie Füllstoffe (wie Bariumsulfat, Kieselgur, Ruß oder Schlämmkreide) in Betracht.
   Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sind dem Fachmann bekannt und in der Literatur beschrieben.

### Beispiele

### Komponente A-1

Lineares Polycarbonat auf Basis von Bisphenol-A mit einem gewichtsgemittelten Molekulargewicht M_{w} von 26.000 g/mol.

### Komponente A-2

Lineares Polycarbonat auf Basis von Bisphenol-A mit einem gewichtsgemittelten Molekulargewicht M_{w} von 20.000 g/mol.

### Komponente B-1

ABS-Emulsionspolymerisat mit einem Acrylnitril : Butadien : Styrol-Verhältnis von 14:47:39 Gew.-% und einer mittleren Teilchengröße dso der Pfropfgrundlage von 315 nm bestimmt durch Ultrazentrifugenmessung.

### Komponente B-2

ABS-Emulsionspolymerisat mit einem Acrylnitril : Butadien : Styrol-Gewichtsverhältnis von 12:57:31 Gew.-%. und einer mittleren Teilchengröße dso der Pfropfgrundlage von 340 nm bestimmt durch Ultrazentrifugenmessung.

### Komponente B-3

Kautschukfreies Copolymerisat, hergestellt im Masse-Polymerisationsverfahren, aus 76 Gew.-% Styrol und 24 Gew.-% Acrylnitril mit einem gewichtsgemittelten Molekulargewicht M_{W} von 130000 g/mol (bestimmt mit GPC mit Polystyrol als Standard

### Komponente C-1

### Bisphenol-A basierendes Oligophosphat mit 8,9% Phosphorgehalt.

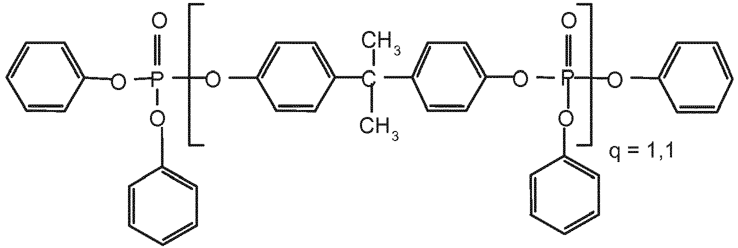

### Komponente C-2

### Resorcinol-basierendes Oligophosphat

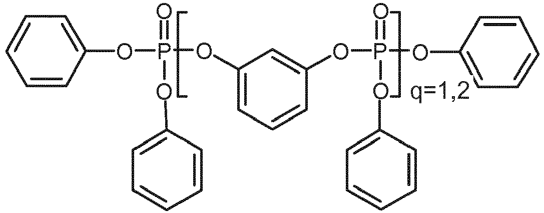

Zur Bestimmung der angegebenen zahlengemittelten N-Werte der Komponenten C-1 und C-2 wurden zuerst die Anteile der oligomeren Phosphate durch HPLC-Messungen bestimmt:

| | |
|---|---|
| Säulentyp: | LiChrosorp RP-8 |
| Elutionsmittel im Gradienten: | Acetonitril/Wasser 50:50 bis 100:0 |
| Konzentration: | 5 mg/ml |

Aus den Anteilen der einzelnen Komponenten (Mono- und Oligophosphate) wurden dann nach bekannten Verfahren die zahlengewichteten N-Mittelwerte berechnet.

### Komponente D-1

Pentaerythrittetrastearat ist kommerziell erhältlich als Loxiol VPG 861 von Emery Oleochemicals.

### Komponente D-2

### Irganox® B900

Gemisch aus 80 Gew.-% Irgafos® 168 (Tris-(2,4-di-tert.-butyl)phenyl-phosphit) und 20 Gew.-% Irganox® 1076 (Octadecyl-3-(3,5-di-tert-butyl-4-hydroxyphenyl)propionat) (BASF, Deutschland)

### Komponente D-3

Blendex 449: Pulverförmiges PTFE-Präparat der Firma General Electric Plastics bestehend aus 50 Gew.-% PTFE enthalten in einer SAN-Copolymermatrix.

### Reaktives Polyurethan-Beschichtungssystem

Als Polyurethan-Beschichtungssystem kam eine Mischung aus Desmophen® XP 2488 (Polyol-Komponente) und Desmodur® N3600 (Polyisocyanat-Komponente), beide von Bayer Material-Science AG, Leverkusen, Deutschland, in einem Mischungsverhältnis von 1:1,7 Gew.-Teilen zum Einsatz.

Desmophen® XP 2488 ist ein verzweigtes Polyester-Polyol mit einer Viskosität nach DIN 53019 von 13.250 mPa.s bei 20 °C, einer Dichte nach DIN 51757von 1,12 g/cm³ bei 20 °C und einem OH-Gehalt von 16,0%.

Desmodur® N3600 ist ein aliphatisches Isocyanat auf Basis von Hexamethylendiisocyanat mit einem NCO-Gehalt nach DIN EN ISO 11909 von 23,5 Gew.-%, einer Viskosität bei 23°C nach DIN EN ISO 3219/A.3 von 1.200 mPa·s und einer Dichte bei 20 °C nach DIN EN ISO 2811 von 1,16 g/cm³.

Die Vernetzung des Polyurethan-Beschichtungssystem wurde mit einem Dibutylzinndilaurat (DBTL) kommerziell erhältlich von OMG Borchers GmbH, Langenfeld katalysiert. Die Zugabemenge betrug 0,5 Gew.-Teile bezogen auf die Summe aus Polyol-Komponente und Polyisocyanat-Komponente.

### Herstellung und Charakterisierung der Polycarbonat-Formmassen

Auf einem Zweischneckenextruder (ZSK-25) (Fa. Werner und Pfleiderer) werden die in Tabelle 1 aufgeführten Einsatzstoffe bei einer Drehzahl von 220 Upm und mit einem Durchsatz von 20 kg/h bei einer Schmelzetemperatur im Bereich von 260 bis 280°C compoundiert und nach Abkühlen und Verfestigung der Schmelze des Compounds granuliert.

Die aus der jeweiligen Compoundierung resultierenden Granulate werden auf einer Spritzgussmaschine (Fa. Arburg) bei einer Schmelzetemperatur von 260°C und einer Werkzeugtemperatur von 80°C zu Prüfkörpern der Abmessung 80 mm x 10 mm x 4 mm verarbeitet.

Sofern nicht anders angegeben, werden die in der vorliegenden Anmeldung genannten Größen nach den folgenden Verfahren bestimmt:
Die Duktilität der Formmassen wird beurteilt anhand des Kerbschlagzähigkeitswertes aₖ gemessen an diesen Prüfkörpern gemäß ISO 180-1A bei 23°C.

Die Duktilität der Formmassen wird beurteilt außerdem anhand des Schlagzähigkeitswertes aₙ gemessen an diesen Prüfkörpern gemäß ISO 180-1U bei 23°C.

Die Wärmeformbeständigkeit wird beurteilt anhand des Vicat B120-Wertes gemessen an diesen Prüfkörpern gemäß ISO 306.

Das E-Modul wird in einem Zugversuch gemäß ISO 527-1,-2 mit einer Dehnrate von 1mm/min gemessen.

Die Flammwidrigkeitsklasse wurde an Probekörpern mit einer Dicke von 1 mm gemäß UL94-V bestimmt.

Die Verbund-Haftung zwischen dem Substrat aus Polycarbonat-Zusammensetzung und der Polyurethan-Haut wird an Streifenproben mit einer Breite von 20 mm, welche aus den so hergestellten, partiell PU-beschichteten 2-Komponenten-Verbundplatten gesägt wurden, durch einen Rollenschälversuch gemäß DIN EN 1464 mit einer Prüfgeschwindigkeit von 100 mm/min ermittelt.

### Herstellung der Verbundbauteile

Es wurden partiell oberflächig beschichtete Formteile mit einer projizierten Fläche von 412 cm² auf einer Spritzgießmaschine in einem Spritzgießwerkzeug mit zwei Kavitäten (einer substratseitigen Kavität und einer polyurethanseitigen Beschichtungskavität, die mit einer RIM-Anlage verknüpft war), hergestellt. Bei dem Verbundbauteil handelt es sich um ein plattenförmiges Bauteil aus thermoplastischem Kunststoff (Träger), dessen Fläche partiell mit einer Polyurethanschicht beschichtet wurde. Die Wanddicke des Trägerformteils betrug ca. 4 mm. Die Polyurethanschichtdicke betrug 200µm.

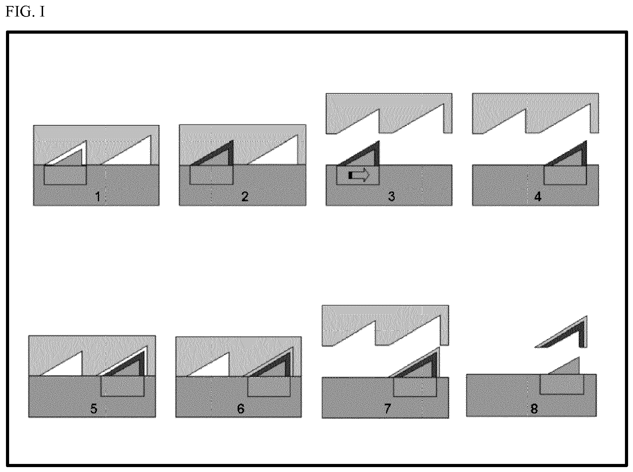

Das erfindungsgemäße Verfahren zur Herstellung der in den Beispielen beschriebenen erfindungsgemäßen Verbundbauteile ist zur besseren Veranschaulichung in Figur 1 dargestellt.

Im ersten Verfahrensschritt wurde das Trägerformteil hergestellt. Dazu wurde thermoplastisches Kunststoffgranulat der Zusammensetzungen wie in Tabelle 1 beschrieben in einem Spritzgießzylinder aufgeschmolzen und bei einer Temperatur von 270°C in die erste Werkzeugkavität des geschlossenen Werkzeugs eingespritzt (Schritte 1 und 2 in Figur 1). Diese Werkzeugkavität wurde auf eine Temperatur von 80°C temperiert. Nach Ablauf der Nachdruckzeit und Kühlzeit, die zur Verfestigung des Trägers führte, wurde im zweiten Verfahrensschritt das Werkzeug geöffnet (Schritt 3 in Figur 1). Dabei wurde das hergestellte Trägerbauteil auf der Auswerferseite des Spritzgießwerkzeugs gehalten und von der Träger-Position (Schritt 3 in Figur 1) komplett mit dem Werkzeugkern über einen Schieber in die Beschichtungs-Position (Schritt 4 in Abbildung 1) verfahren. Danach wurde das Spritzgießwerkzeug erneut geschlossen (Schritt 5 in Figur 1), eine Schließkraft für einen Druck von maximal 200 bar wurde aufgebaut und im dritten Verfahrensschritt das lösemittelfreie reaktive Polyurethansystem (s.o.) unter einem Druck von ca. 30 bar in die Beschichtungskavität eingespritzt (Schritt 6 in Figur 1). Die zwei reaktiven Komponenten des Polyurethan-Beschichtungssystems wurden dabei von der RIM-Anlage in einen Hochdruckgegenstrommischkopf gefördert und vor dem Einspritzen dort vermischt. Die PU-seitige Kavität wurde dabei auf eine Temperatur von 80°C temperiert. Nach dem Ende des Einspritzens wurde die Einspritzdüse des Polyurethan-Mischkopfes mittels eines Hydraulikzylinders unter einem Druck von zunächst 50 bar versiegelt, um ein Zurückströmen des Beschichtungsmaterials zu verhindern. Nach Ablauf der Reaktions- und Kühlzeit wurde im vierten Verfahrensschritt das Werkzeug ein weiteres Mal geöffnet (Schritt 7 in Figur 1) und das beschichtete Formteil entformt (Schritt 8 in Figur 1).

Tabelle 1 zeigt den Einfluss der Trägerzusammensetzungen auf die Haftung zwischen den Schichten des Verbundbauteils. Die Anteile der Komponenten sind in Gew.-Teilen angegeben.

| Tabelle 1 | Komponente | Einheit | Vergleich 1 | Beispiel 1 | Beispiel 2 | Vergleich 2 | Beispiel 3 |
|---|---|---|---|---|---|---|---|
| | A-1 | | 54,71 | 73,10 | 37,15 | 42,21 | 71,82 |
| | A-2 | | 9,83 | 10,15 | 36,54 | 35,22 | 22,80 |
| | B-1 | | 12,66 | | | | |
| | B-2 | | | 5,08 | 9,11 | 9,11 | 3,04 |
| | B-3 | | 10,03 | | | | |
| | C-1 | | 12,77 | 11,68 | 17,21 | 0,00 | 2,33 |
| | C-2 | | | | | 13,46 | |
| | D-1 | | 0,41 | 0,41 | 0,40 | 0,40 | 0,53 |
| | D-2 | | 0,10 | 0,10 | 0,10 | 0,10 | 0,10 |
| | D-3 | | 0,81 | 1,02 | 0,71 | 0,71 | 0,81 |
| Gehalt an Polybutadien bezogen auf Komponenten A bis C | | % | 5,7 | 2,8 | 5,1 | 5,1 | 1,7 |
| Gehalt an butadienfreiem Vinyl(co)polymerisat bezogen auf Komponenten A bis C | | % | 16,9 | 2,2 | 4,0 | 4,0 | 1,3 |
| Haftung | | N/mm | 0,80 | >7,00 | 2,42 | 3,47 | >7,00 |
| Izod Kerbschlagzähigkeit | 23°C | kJ/m² | 29 | 30 | 30 | 25 | 45 |
| Izod Schlagzähigkeit | 23°C | kJ/m² | n.g. | n.g. | n.g. | n.g. | n.g. |
| E-Modul aus Zugversuch | 23°C | MPa | 2700 | 2700 | 2700 | 2700 | 2400 |
| Vicat | | °C | 99 | 108 | 93 | 90 | 136 |
| UL94-V/1,0 mm | | Klasse | n.b. | V0 | V0 | V0 | V1 |

| | | | | | | | |
|---|---|---|---|---|---|---|---|
| n.b.: nicht bestanden, n.g.: nicht gebrochen Haftungswerte >7 N/mm bedeuten, dass sich die Polyurethanschicht nicht zerstörungsfrei vom Thermoplasten ablösen lässt. | | | | | | | |

Wie aus Tabelle 1 ersichtlich, zeigen die erfindungsgemäßen Beispiele 1-3 neben einer deutlich verbesserten Haftung an das Polyurethansystem eine gleichbleibend hohe oder verbesserte Zähigkeit, eine hohe Wärmeformbeständigkeit in Kombination mit einer exzellenten Flammwidrigkeit. Die optimale Eigenschaftskombination wird nur erreicht, wenn der Gehalt an Polybutadien bezogen auf die Komponenten A+B+C im erfindungsgemäßen Bereich liegt und gleichzeitig der Gehalt an butadienfreien Vinyl(co)polymerisat ebenfalls im erfindungsgemäßen Bereich liegt. Wird wie in Vergleichsbeispiel 1 der Polybutadiengehalt als auch der Gehalt an butadienfreien Vinyl(co)polymerisat überschritten, so erreicht die Haftung nicht das technisch erforderliche Niveau. Außerdem wird die erforderliche Flammwidrigkeit nicht erreicht. Wird wie in Vergleichsbeispiel 2 ein nicht erfindungsgemäßes Flammschutzmittel verwendet, erreichen die Wärmeformbeständigkeit und die Kerbschlagzähigkeit nicht das erforderliche Niveau

Besonders bevorzugte Formmassen sind solche, bei denen die Vicat-Temperatur bei über 100°C liegt.

## Patentansprüche

1. Zusammensetzungen enthaltend
A) 70 bis 95 Gew.-Teile mindestens eines Polymers ausgewählt aus der Gruppe bestehend aus aromatisches Polycarbonat und aromatisches Polyestercarbonat,
B) 1 bis 10 Gew.-Teile einer Mischung enthaltend mindestens ein polybutadienbasiertes Pfropfpolymerisat und mindestens ein butadienfreies Vinyl(co)polymerisat,
C) 1 bis 20 Gew.-Teile mindestens eines phosphorhaltigen Flammschutzmittels ausgewählt aus der Gruppe bestehend aus Phosphonataminen, Phosphazenen sowie Mono- und oligomeren Phosphor- und Phosphonsäureester der allgemeinen Formel (V) 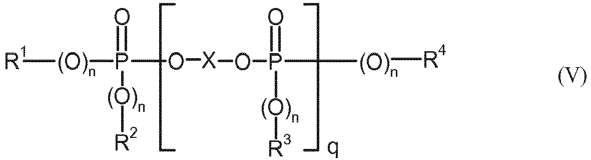 worin
R¹, R², R³ und R⁴, unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆-cycloalkyl, C₆ bis C₂₀-Aryl oder C₇ bis C₁₂-Aralkyl,
n unabhängig voneinander, 0 oder 1
q 0 bis 30
X einen mehrkernigen aromatischen Rest mit 12 bis 30 C-Atomen, oder einen linearen oder verzweigten aliphatischen Rest mit 2 bis 30 C-Atomen, der OH-substituiert sein und bis zu 8 Etherbindungen enthalten kann,
bedeuten
D) 0,1 bis 20,0 Gew.-Teile (jeweils bezogen auf die Summe der Komponenten A bis C) mindestens eines Polymeradditivs,
wobei der Polybutadiengehalt bezogen auf die Summe der Gewichtsteile der Komponenten A bis C 0,5 bis 5,5 Gew.-% beträgt,
und wobei der Gesamtgehalt an butadienfreiem Vinyl(co)polymerisat aus der Komponente B bezogen auf die Summe der Komponenten A bis C 0,5 bis 5,0 Gew.-% beträgt,
und wobei die Zusammensetzungen frei sind von thermoplastischen Polyestern wie Polyalkylenterephthlaten,
und wobei die Summe der Gewichtsteile der Komponenten A, B und C in der Polycarbonatzusammensetzung auf 100 normiert ist.

2. Zusammensetzungen gemäß Anspruch 1 enthaltend
A) 72 bis 95 Gew.-Teile mindestens eines Polymers ausgewählt aus der Gruppe bestehend aus aromatisches Polycarbonat und aromatisches Polyestercarbonat,
B) 2 bis 10 Gew.-Teile einer Mischung enthaltend mindestens ein polybutadienbasiertes Pfropfpolymerisat und mindestens ein butadienfreies Vinyl(co)polymerisat,
C) 2 bis 19 Gew.-Teile des phosphorhaltigen Flammschutzmittels,
D) 0,2 bis 15,0 Gew.-Teile (jeweils bezogen auf die Summe der Komponenten A bis C) mindestens eines Polymeradditivs,
wobei der Polybutadiengehalt bezogen auf die Summe der Gewichtsteile der Komponenten A bis C 1,0 bis 5,5 Gew.-% beträgt,
und wobei der Gesamtgehalt an butadienfreiem Vinyl(co)polymerisat aus der Komponente B bezogen auf die Summe der Komponenten A bis C 0,5 bis 4,5 Gew.-% beträgt,
und wobei die Zusammensetzungen frei sind von thermoplastischen Polyestern wie Polyalkylenterephthlaten,
und wobei die Summe der Gewichtsteile der Komponenten A, B und C in der Polycarbonatzusammensetzung auf 100 normiert ist.

3. Zusammensetzungen gemäß Anspruch 1 enthaltend
A) 73 bis 95 Gew.-Teile mindestens eines Polymers ausgewählt aus der Gruppe bestehend aus aromatisches Polycarbonat und aromatisches Polyestercarbonat,
B) 3 bis 10 Gew.-Teile einer Mischung enthaltend mindestens ein polybutadienbasiertes Pfropfpolymerisatund mindestens ein butadienfreies Vinyl(co)polymerisat,
C) 2 bis 18 Gew.-Teile des phosphorhaltigen Flammschutzmittels,
D) 0,3 bis 10,0 Gew.-Teile (jeweils bezogen auf die Summe der Komponenten A bis C) mindestens eines Polymeradditivs,
wobei der Polybutadiengehalt bezogen auf die Summe der Gewichtsteile der Komponenten A bis C 1,5 bis 5,5 Gew.-% beträgt,
und wobei der Gesamtgehalt an butadienfreiem Vinyl(co)polymerisat aus der Komponente B bezogen auf die Summe der Komponenten A bis C 1,0 bis 4,5 Gew.-% beträgt,
und wobei die Zusammensetzungen frei sind von thermoplastischen Polyestern wie Polyalkylenterephthlaten,
und wobei die Summe der Gewichtsteile der Komponenten A, B und C in der Polycarbonatzusammensetzung auf 100 normiert ist.

4. Zusammensetzungen bestehend aus den Komponenten A, B, C und D gemäß Anspruch 1.

5. Zusammensetzungen gemäß einem oder mehreren der vorherigen Ansprüche,
wobei die Komponente B
B.1 5 bis 95, vorzugsweise 15 bis 92, insbesondere 25 bis 60 Gew.-%, bezogen auf Komponente B, wenigstens eines Vinylmonomeren auf
B.2 95 bis 5, vorzugsweise 85 bis 8, insbesondere 75 bis 40 Gew.-%, bezogen auf Komponente B eine oder mehrere Polybutadienpfropfgrundlagen umfasst.

6. Zusammensetzungen gemäß Anspruch 5,
wobei die Komponente B.1 Gemische aus
B.1.1 50 bis 99 Gew.-%, bezogen auf B.1, Vinylaromaten und/oder kernsubstituierten Vinylaromaten (wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und
B.1.2 1 bis 50 Gew.-%, bezogen auf B.1, Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid
umfasst.

7. Zusammensetzungen gemäß einem oder mehreren der vorherigen Ansprüche,
wobei die Komponente D Thermostabilisatoren, Entformungsmittel, Farbmittel und UV Absorber umfasst.

8. Verbundbauteile umfassend
a) einen Träger aus einer thermoplastischen Zusammensetzung gemäß einem oder mehreren der Ansprüche 1 bis 7
b) mindestens eine Polyurethanschicht aus der Gruppe der Lacke, Schäume und kompakte Häute, enthaltend
- mindestens eine Polyisocyanat-Komponente,
- mindestens eine polyfunktionelle H-aktive Verbindung, und
- optional mindestens ein Polyurethan-Additiv und/oder Prozesshilfsstoff Und **gekennzeichnet durch** ein molares Verhältnis der NCO- zu H- aktiven Gruppen von 1:1 bis 1,1:1.

9. Verbundbauteile gemäß Anspruch 8, wobei die Polyurethanschicht ein Lack mit einer Schichtdicke von 50 - 300 µm ist.

10. Verbundbauteile gemäß Anspruch 8, wobei die Polyurethanschicht ein Schaum mit einer Schichtdicke von 1 mm bis 1 cm ist.

11. Verbundbauteile gemäß Anspruch 8, wobei die Polyurethanschicht eine kompakte Haut mit einer Schichtdicke von 1 mm bis 4 mm ist.

12. Verfahren zur Herstellung von Verbundbauteile nach einem der vorhergehenden Ansprüche, **dadurch gekennzeichnet, dass** die Polyurethanschicht hergestellt ist durch Auspolymerisation eines reaktiven Polyurethanrohstoffgemischs enthaltend
- mindestens eine Polyisocyanat-Komponente,
- mindestens eine polyfunktionelle H-aktive Verbindung, und
- optional mindestens ein Polyurethan-Additiv und/oder Prozesshilfsstoff in direktem Kontakt mit dem zuvor aus der thermoplastischen Zusammensetzung geformten und erstarrten Träger.

13. Verfahren zur Herstellung von Verbundbauteilen nach einem der vorhergehenden Ansprüche **dadurch gekennzeichnet, dass**
(i) in einem ersten Verfahrensschritt die Schmelze der thermoplastischen Zusammensetzung
in eine erste Werkzeugkavität eingespritzt und nachfolgend abgekühlt wird,
(ii) in einem zweiten Verfahrensschritt das abgekühlte thermoplastische Bauteil in eine größere Kavität überführt und dadurch ein definierter Spaltraum erzeugt wird,
(iii) im dritten Verfahrensschritt in den so resultierenden Spaltraum zwischen dem thermoplastischen Bauteil und der Werkzeugoberfläche der vergrößerten Kavität ein reaktives Polyurethanrohstoffgemisch enthaltend
- mindestens eine Polyisocyanat-Komponente,
- mindestens eine polyfunktionelle H-aktive Verbindung, und
- optional mindestens ein Polyurethan-Additiv und/oder Prozesshilfsstoff gespritzt wird, wobei das Polyurethanrohstoffgemisch im direkten Kontakt mit der Oberfläche des thermoplastischen Trägers zu einer kompakten Polyurethanschicht oder zu einer Polyurethanschaumschicht auspolymerisiert,
(iv) im vierten Verfahrensschritt das Verbundbauteil aus der Werkzeugkavität entformt wird, wobei die Verfahrensschritte (i) bis (iv) unmittelbar aufeinander folgen.

14. Verfahren nach Anspruch 13, **dadurch gekennzeichnet, dass** im Verfahrensschritt (iii) die mit der thermoplastischen Zusammensetzung in Kontakt stehende Oberfläche des Spritzgusswerkzeuges auf eine Temperatur im Bereich 60 bis 90°C und die mit dem reaktiven Polyurethangemisch in Kontakt stehende Oberfläche des Spritzgusswerkzeuges auf eine Temperatur im Bereich 60 bis 90°C temperiert wird.

15. Verwendung eines Verbundbauteils gemäß einem der Ansprüche 1 bis 10 als Innen- oder Außenbauteil eines Schienen-, Luftfahrt- oder Kraftfahrzeuges und für Elektro/Elektronikbauteile- und IT Bauteile.

## Claims

1. Compositions comprising
A) 70 to 95 parts by weight of at least one polymer selected from the group consisting of aromatic polycarbonate and aromatic polyester carbonate,
B) 1 to 10 parts by weight of a mixture comprising at least one polybutadiene-based graft polymer and at least one butadiene-free vinyl (co)polymer,
C) 1 to 20 parts by weight of at least one phosphorus-containing flame retardant selected from the group consisting of phosphonate amines, phosphazenes and monomeric and oligomeric phosphoric and phosphonic esters of the general formula (V) 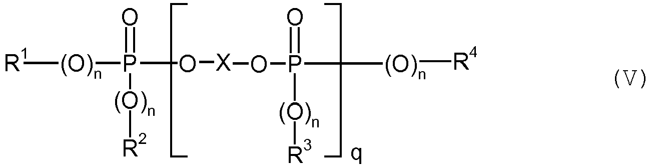 in which
R¹, R², R³ and R⁴ are each independently optionally halogenated C₁ to C₈-alkyl, in each case optionally alkyl-substituted, preferably C₁ to C₄-alkyl-substituted, and/or halogen-substituted, preferably chlorine- or bromine-substituted, C₅ to C₆-cycloalkyl, C₆ to C₂₀-aryl or C₇ to C₁₂-aralkyl,
n is independently 0 or 1
q is 0 to 30
X is a polycyclic aromatic radical having 12 to 30 carbon atoms, or a linear or branched aliphatic radical having 2 to 30 carbon atoms, which may be OH-substituted and may contain up to 8 ether bonds,
D) 0.1 to 20.0 parts by weight (based in each case on the sum total of components A to C) of at least one polymer additive,
where the polybutadiene content based on the sum total of the parts by weight of components A to C is 0.5% to 5.5% by weight,
and where the total content of butadiene-free vinyl (co)polymer from component B based on the sum total of components A to C is 0.5% to 5.0% by weight, and where the compositions are free of thermoplastic polyesters such as polyalkylene terephthalates,
and where the sum total of the parts by weight of components A, B and C in the polycarbonate composition is normalized to 100.

2. Compositions according to Claim 1, comprising
A) 72 to 95 parts by weight of at least one polymer selected from the group consisting of aromatic polycarbonate and aromatic polyester carbonate,
B) 2 to 10 parts by weight of a mixture comprising at least one polybutadiene-based graft polymer and at least one butadiene-free vinyl (co)polymer,
C) 2 to 19 parts by weight of phosphorus-containing flame retardant,
D) 0.2 to 15.0 parts by weight (based in each case on the sum total of components A to C) of at least one polymer additive,
where the polybutadiene content based on the sum total of the parts by weight of components A to C is 1.0% to 5.5% by weight,
and where the total content of butadiene-free vinyl (co)polymer from component B based on the sum total of components A to C is 0.5% to 4.5% by weight, and where the compositions are free of thermoplastic polyesters such as polyalkylene terephthalates,
and where the sum total of the parts by weight of components A, B and C in the polycarbonate composition is normalized to 100.

3. Compositions according to Claim 1, comprising
A) 73 to 95 parts by weight of at least one polymer selected from the group consisting of aromatic polycarbonate and aromatic polyester carbonate,
B) 3 to 10 parts by weight of a mixture comprising at least one polybutadiene-based graft polymer and at least one butadiene-free vinyl (co)polymer,
C) 2 to 18 parts by weight of phosphorus-containing flame retardant,
D) 0.3 to 10.0 parts by weight (based in each case on the sum total of components A to C) of at least one polymer additive,
where the polybutadiene content based on the sum total of the parts by weight of components A to C is 1.5% to 5.5% by weight,
and where the total content of butadiene-free vinyl (co)polymer from component B based on the sum total of components A to C is 1.0% to 4.5% by weight, and where the compositions are free of thermoplastic polyesters such as polyalkylene terephthalates,
and where the sum total of the parts by weight of components A, B and C in the polycarbonate composition is normalized to 100.

4. Compositions consisting of components A, B, C and D according to Claim 1.

5. Compositions according to one or more of the preceding claims,
wherein component B comprises
B.1 5% to 95%, preferably 15% to 92% and especially 25% to 60% by weight, based on component B, of at least one vinyl monomer on
B.2 95% to 5%, preferably 85% to 8% and especially 75% to 40% by weight, based on component B, of one or more polybutadiene graft bases.

6. Compositions according to Claim 5,
wherein component B.1 comprises mixtures of
B.1.1 50% to 99% by weight, based on B.1, of vinylaromatics and/or ring-substituted vinylaromatics (such as styrene, α-methylstyrene, p-methylstyrene, p-chlorostyrene) and/or (C₁-C₈)-alkyl methacrylates such as methyl methacrylate, ethyl methacrylate), and
B.1.2 1% to 50% by weight, based on B.1, of vinyl cyanides (unsaturated nitriles such as acrylonitrile and methacrylonitrile) and/or (C₁-C₈)-alkyl (meth)acrylates such as methyl methacrylate, n-butyl acrylate, t-butyl acrylate, and/or derivatives (such as anhydrides and imides) of unsaturated carboxylic acids, for example maleic anhydride and N-phenylmaleimide.

7. Compositions according to one or more of the preceding claims,
wherein component D comprises thermal stabilizers, demoulding agents, colourants and UV absorbers.

8. Composite components comprising
a) a carrier composed of a thermoplastic composition according to one or more of Claims 1 to 7
b) at least one polyurethane layer from the group of the coating materials, foams and compact skins, comprising
- at least one polyisocyanate component,
- at least one polyfunctional H-active compound, and
- optionally at least one polyurethane additive and/or processing aid,
and **characterized by** a molar ratio of the NCO- to H-active groups of 1:1 to 1.1:1.

9. Composite components according to Claim 8, wherein the polyurethane layer is a coating material having a layer thickness of 50-300 µm.

10. Composite components according to Claim 8, wherein the polyurethane layer is a foam having a layer thickness of 1 mm to 1 cm.

11. Composite components according to Claim 8, wherein the polyurethane layer is a compact skin having a layer thickness of 1 mm to 4 mm.

12. Process for producing composite components according to any of the preceding claims, **characterized in that** the polyurethane layer has been produced by full polymerization of a reactive polyurethane raw material mixture comprising
- at least one polyisocyanate component,
- at least one polyfunctional H-active compound, and
- optionally at least one polyurethane additive and/or processing aid,
in direct contact with the carrier which has been shaped beforehand from the thermoplastic composition and solidified.

13. Process for producing composite components according to any of the preceding claims, **characterized in that**
(i) in a first process step the melt of the thermoplastic composition is injected into a first mould cavity and then cooled,
(ii) in a second process step the cooled thermoplastic component is transferred into a larger cavity and a defined gap is produced thereby,
(iii) in the third process step the gap which thus results between the thermoplastic component and the mould surface of the enlarged cavity is injected with a reactive polyurethane raw material mixture comprising
- at least one polyisocyanate component,
- at least one polyfunctional H-active compound, and
- optionally at least one polyurethane additive and/or processing aid,
the polyurethane raw material mixture polymerizing fully in direct contact with the surface of the thermoplastic carrier to give a compact polyurethane layer or to give a polyurethane foam layer,
(iv) in the fourth process step the composite component is demoulded from the mould cavity, process steps (i) to (iv) following one another in immediate succession.

14. Process according to Claim 13, **characterized in that** in process step (iii) the surface of the injection mould in contact with the thermoplastic composition is heated to a temperature in the range of 60 to 90°C and the surface of the injection mould in contact with the reactive polyurethane mixture to a temperature in the range of 60 to 90°C.

15. Use of a composite component according to any of Claims 1 to 10 as an interior or exterior component of a rail vehicle, aircraft or motor vehicle and for electrical/electronic components and IT components.

## Revendications

1. Compositions contenant :
A) 70 à 95 parties en poids d'au moins un polymère choisi dans le groupe constitué par un polycarbonate aromatique et un polyester-carbonate aromatique,
B) 1 à 10 parties en poids d'un mélange contenant au moins un polymère greffé à base de polybutadiène et au moins un (co)polymère de vinyle sans butadiène,
C) 1 à 20 parties en poids d'au moins un agent ignifugeant contenant du phosphore choisi dans le groupe constitué par des phosphonatamines, des phosphazènes ainsi que des esters monomériques ou oligomériques d'acide phosphorique et d'acide phosphonique de formule générale (V) 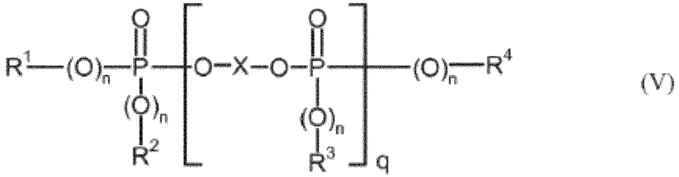 dans laquelle
R¹, R², R³ et R⁴, signifient indépendamment les uns des autres C₁-C₈-alkyle à chaque fois éventuellement halogéné, C₅-C₆-alkyle substitué à chaque fois éventuellement par alkyle, de préférence C₁-C₄-alkyle, et/ou par halogène, de préférence chlore, brome, C₆-C₂₀-aryle ou C₇-C₁₂-aralkyle,
n signifient indépendamment les uns des autres, 0 ou 1
q signifie 0 à 30
X signifie un radical aromatique à plusieurs noyaux comportant 12 à 30 atomes de C, ou un radical aliphatique linéaire ou ramifié comportant 2 à 30 atomes de C, qui peut être substitué par OH et contenir jusqu'à 8 liaisons éther,
D) 0,1 à 20,0 parties en poids (à chaque fois par rapport à la somme des composants A à C) d'au moins un additif polymère,
la teneur en polybutadiène, par rapport à la somme des parties en poids des composants A à C, étant de 0,5 à 5,5 % en poids,
et la teneur totale en (co)polymère de vinyle sans butadiène du composant B, par rapport à la somme des composants A à C, étant de 0,5 à 5,0 % en poids,
et les compositions étant exemptes de polyesters thermoplastiques tels que les polyalkylènes téréphtalates,
et la somme des parties en poids des composants A, B et C dans la composition de polycarbonate étant normée à 100.

2. Compositions selon la revendication 1, contenant :
A) 72 à 95 parties en poids d'au moins un polymère choisi dans le groupe constitué par un polycarbonate aromatique et un polyester-carbonate aromatique,
B) 2 à 10 parties en poids d'un mélange contenant au moins un polymère greffé à base de polybutadiène et au moins un (co)polymère de vinyle sans butadiène,
C) 2 à 19 parties en poids d'agent ignifuge contenant du phosphore,
D) 0,2 à 15,0 parties en poids (à chaque fois par rapport à la somme des composants A à C) d'au moins un additif polymère,
la teneur en polybutadiène, par rapport à la somme des parties en poids des composants A à C, étant de 1,0 à 5,5 % en poids,
et la teneur totale en (co)polymère de vinyle sans butadiène du composant B, par rapport à la somme des composants A à C, étant de 0,5 à 4,5 % en poids,
et les compositions étant exemptes de polyesters thermoplastiques tels que les polyalkylènes téréphtalates
et la somme des parties en poids des composants A, B et C dans la composition de polycarbonate étant normée à 100.

3. Compositions selon la revendication 1, contenant :
A) 73 à 95 parties en poids d'au moins un polymère choisi dans le groupe constitué par un polycarbonate aromatique et un polyester-carbonate aromatique,
B) 3 à 10 parties en poids d'un mélange contenant au moins un polymère greffé à base de polybutadiène et au moins un (co)polymère de vinyle sans butadiène,
C) 2 à 18 parties en poids d'agent ignifuge contenant du phosphore,
D) 0,3 à 10,0 parties en poids (à chaque fois par rapport à la somme des composants A à C) d'au moins un additif polymère,
la teneur en polybutadiène, par rapport à la somme des parties en poids des composants A à C, étant de 1,5 à 5,5 % en poids,
et la teneur totale en (co)polymère de vinyle sans butadiène du composant B, par rapport à la somme des composants A à C, étant de 1,0 à 4,5 % en poids,
et les compositions étant exemptes de polyesters thermoplastiques tels que les polyalkylènes téréphtalates,
et la somme des parties en poids des composants A, B et C dans la composition de polycarbonate étant normée à 100.

4. Compositions constituées par les composants A, B, C et D selon la revendication 1.

5. Compositions selon une ou plusieurs des revendications précédentes, dans lesquelles le composant B comprend
B.1 5 à 95, de préférence 15 à 92, notamment 25 à 60 % en poids, par rapport au composant B, d'au moins un monomère de vinyle sur
B.2 95 à 5, de préférence 85 à 8, notamment 75 à 40 % en poids, par rapport au composant B, d'une ou de plusieurs bases de greffage de polybutadiène.

6. Compositions selon la revendication 5, dans lesquelles le composant B.1 comprend des mélanges de
B.1.1 50 à 99% en poids, par rapport à B.1, de composés aromatiques de vinyle et/ou de composés aromatiques de vinyle à noyau substitué (tels que le styrène, l'α-méthylstyrène, le p-méthylstyrène, le p-chlorostyrène) et/ou d'esters alkyliques en (C₁-C₈) de l'acide méthacrylique (tels que le méthacrylate de méthyle, le méthacrylate d'éthyle), et
B.1.2 1 à 50% en poids, par rapport à B.1, de cyanures de vinyle (nitriles insaturés tels que l'acrylonitrile et le méthacrylonitrile) et/ou d'esters alkyliques en (C₁-C₈) de l'acide (méth)acrylique, tels que le méthacrylate de méthyle, l'acrylate de n-butyle, l'acrylate de t-butyle, et/ou de dérivés (tels que des anhydrides et des imides) d'acides carboxyliques insaturés, par exemple l'anhydride de l'acide maléique et le N-phényl-maléinimide.

7. Compositions selon une ou plusieurs des revendications précédentes, dans lesquelles le composant D comprend des thermostabilisateurs, des agents démoulants, des colorants et des absorbeurs UV.

8. Composants composites, comprenant :
a) un support en une composition thermoplastique selon une ou plusieurs des revendications 1 à 7,
b) au moins une couche de polyuréthane du groupe des vernis, des mousses et des peaux compactes, contenant
- au moins un composant polyisocyanate,
- au moins un composé à H actif polyfonctionnel et
- éventuellement au moins un additif de polyuréthane et/ou un adjuvant de procédé,
et **caractérisés par** un rapport molaire entre les groupes NCO et H actifs de 1:1 à 1,1:1.

9. Composants composites selon la revendication 8, dans lesquels la couche de polyuréthane est un vernis ayant une épaisseur de couche de 50 à 300 µm.

10. Composants composites selon la revendication 8, dans lesquels la couche de polyuréthane est une mousse ayant une épaisseur de couche de 1 mm à 1 cm.

11. Composants composites selon la revendication 8, dans lesquels la couche de polyuréthane est une peau compacte ayant une épaisseur de couche de 1 mm à 4 mm.

12. Procédé de fabrication de composants composites selon l'une quelconque des revendications précédentes, **caractérisé en ce que** la couche de polyuréthane est fabriquée par polymérisation d'un mélange de matières premières de polyuréthane réactif contenant
- au moins un composant polyisocyanate,
- au moins un composé à H actif polyfonctionnel, et
- éventuellement au moins un additif de polyuréthane et/ou un adjuvant de procédé,
en contact direct avec le support formé auparavant à partir de la composition thermoplastique et durci.

13. Procédé de fabrication de composants composites selon l'une quelconque des revendications précédentes, **caractérisé en ce que**
(i) lors d'une première étape de procédé, la masse fondue de la composition thermoplastique est injectée dans une première cavité d'outil, puis refroidie,
(ii) lors d'une deuxième étape de procédé, le composant thermoplastique refroidi est transféré dans une cavité plus grande et un espace défini est ainsi formé,
(iii) lors de la troisième étape de procédé, un mélange de matières premières de polyuréthane réactif contenant
- au moins un composant polyisocyanate,
- au moins un composé à H actif polyfonctionnel, et
- éventuellement au moins un additif de polyuréthane et/ou un adjuvant de procédé,
est injecté dans l'espace résultant ainsi entre le composant thermoplastique et la surface d'outil de la cavité plus grande, le mélange de matières premières de polyuréthane étant polymérisé en contact direct avec la surface du support thermoplastique en une couche de polyuréthane compacte ou en une couche de mousse de polyuréthane,
(iv) lors de la quatrième étape de procédé, le composant composite est démoulé de la cavité d'outil, les étapes de procédé (i) à (iv) étant directement successives.

14. Procédé selon la revendication 13, **caractérisé en ce que**, lors de l'étape de procédé (iii), la surface de l'outil de moulage par injection en contact avec la composition thermoplastique est conditionnée à une température dans la plage allant de 60 à 90 °C et la surface de l'outil de moulage par injection en contact avec le mélange de polyuréthane réactif est conditionnée à une température dans la plage allant de 60 à 90 °C.

15. Utilisation d'un composant composite selon l'une quelconque des revendications 1 à 10 en tant que composant intérieur ou extérieur d'un véhicule ferroviaire, aéronautique ou automobile et pour les composants électriques/électroniques et les composants informatiques.
